(19) Europäisches Patentamt
European Patent Office
Office européen des brevets

(11) EP 2 742 372 B1

(12) **EUROPEAN PATENT SPECIFICATION**

(45) Date of publication and mention of the grant of the patent:
**16.09.2015 Bulletin 2015/38**

(21) Application number: **12750657.4**

(22) Date of filing: **07.08.2012**

(51) Int Cl.:
***G02B 1/04*** *(2006.01)* ***G02B 5/30*** *(2006.01)*

(86) International application number:
**PCT/US2012/049812**

(87) International publication number:
**WO 2013/025397 (21.02.2013 Gazette 2013/08)**

(54) **OPTICAL RETARDATION FILM AND METHOD OF MANUFACTURING**

OPTISCHE VERZÖGERUNGSFOLIE UND HERSTELLUNGSVERFAHREN

FILM DE RETARD OPTIQUE ET PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.08.2011 US 201161522868 P**

(43) Date of publication of application:
**18.06.2014 Bulletin 2014/25**

(73) Proprietor: **Dow Global Technologies LLC**
**Midland, MI 48674 (US)**

(72) Inventors:
- **ZHOU, Weijun**
  **Lake Jackson, TX 77566 (US)**
- **FOLKENROTH, Jason J.**
  **Midland, MI 48640 (US)**
- **BAUMANN, Michael**
  **29664 Walsrode (DE)**

(74) Representative: **f & e patent**
**Fleischer, Engels & Partner mbB, Patentanwälte**
**Braunsberger Feld 29**
**51429 Bergisch Gladbach (DE)**

(56) References cited:
**JP-A- 2003 096 207**
**JP-A- 2004 157 300**
**US-A1- 2007 009 676**
**US-A1- 2009 230 576**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 742 372 B1

## Description

The present invention relates to the provision of a cellulosic optical retardation film with suitable birefringent characteristics to enhance wide view performance upon use in liquid crystal devices (LCD), especially in vertically aligned (VA) type LCDs. Moreover, the present invention relates to a method of manufacturing such a cellulosic optical retardation film and its use in a liquid crystal display or an imaging device.

Liquid crystal displays are widely used in a variety of electronic devices including computer screens, mobile phones, digital cameras and flat panel television systems with increasingly higher demands to display performance. Modern LCDs comprise optical retardation films to enhance the display quality in terms of expanding the viewing angle, i.e. maintaining a high contrast ratio and avoiding color shifts at oblique viewing angles. An optical retardation film is a substantially transparent film that provides the physical effect of a wave plate, i.e. alters the polarization state of a light wave traveling through it due to its birefringent properties. A conventional liquid crystal module comprises a liquid crystal cell that is sandwiched between two polarizing plates. The optical retardation film is typically provided between one or both polarizing plates and the liquid crystal cell. Although a retardation film can be integrated as a physically separate element, it is commonly laminated onto one side of a polarizer being part of the respective polarizing plate. Depending on the optical retardation characteristics of the optical retardation film, it can be laminated either onto the polarizer of the top polarizing plate or the one of the bottom polarizing plate or both polarizers. The polarizers are normally produced by stretching an iodine-doped polyvinyl alcohol (PVA) based sheet. As PVA exhibits moisture sensitivity, the polarizing plates commonly include protection films applied to both sides of the PVA-based polarizer sheet. The protection films may additionally function as retardation layer depending on their birefringent properties. Cellulose acylate and in particular triacetyl cellulose (TAC) films have proven to be suitable protection films for PVA-based polarizers due to their beneficial moisture transfer properties, high transparency and good adherence to PVA, however their birefringence is comparatively low, which is not desirable with respect to optimum optical retardation for a number of LCD) types.

The anisotropic optical properties of an optical retardation film may be described in terms of three principal and orthogonal refractive indices, $n_x$, $n_y$ and $n_z$, wherein $n_x$ is the refractive index for the direction having the highest refractive index in the film plane (x-direction), $n_y$ is the refractive index in the direction perpendicular to the x-direction in the film plane (y-direction) and $n_z$ is the refractive index along the film thickness direction (z-direction). Birefringence refers to a difference $\Delta n$ between any two of the three principal and orthogonal refractive indices. Due to this difference the polarization components of a light wave along the respective two perpendicular axes propagate with different phase velocity through the film imparting a phase difference, $\Gamma$, which depends besides $\Delta n$ also on the film thickness, d, by the equation

$$\Gamma = \frac{2\pi \times \Delta n \times d}{\lambda_0} \qquad (1)$$

wherein $\lambda_0$ is the vacuum wavelength of the light. A quarter-wave plate yields for instance a phase difference of $\pi/2$ and can be used to convert linearly polarized light to circularly or elliptically polarized light and vice versa. A half-wave plate generates a phase difference of $\pi$, which causes a rotation of the polarization direction of linearly polarized light provided that the incident polarization is not oriented along one of the optical axes.

Following Deng-Ke Yang and Shin-Tson Wu in "Fundamentals of Liquid Crystal Devices", John Wiley & Sons, Ltd. (2006), optical birefringent films can be classified as uniaxial or biaxial films. For uniaxial films the index of refraction along one axis, the principal optical axis (extraordinary refractive index "$n_c$"), differs from a substantially uniform index of refraction along directions perpendicular to the principal optical axis (ordinary refractive index "$n_o$"). Uniaxial films typically fall into one of two classes, nominally "a-plate" and "c-plate". The principal optical axis of an a-plate is parallel to the film's surface, i.e. $n_z$ and either $n_y$ or $n_x$ are equal but differ from $n_x$ or $n_y$, respectively, whereas the principal optical axis of a c-plate is perpendicular to the film's surface, i.e. $n_x$ and $n_y$ are equal but differ from $n_z$. If the extraordinary index corresponds to greatest (smallest) of the three mutually orthogonal indices of refraction noted above, the principal optical axis is referred to as the fast (slow) axis and the corresponding film or plate is designated as "positive" ("negative"). A biaxial optical film or plate refers to a birefringent optical element that has three unequal, mutually orthogonal indices of refraction, i.e. $n_x \neq n_y \neq n_z$. Parameters used to describe biaxial optical films and where applicable also uniaxial optical films include the in-plane birefringence, $n_x$-$n_y$, the mean out-of-plane birefringence, $(n_x+n_y)/2-n_z$ and the parameter $N_z$ related to optical biaxiality as expressed in equation (2),

$$N_z = \frac{n_x - n_z}{n_x - n_y} \qquad (2).$$

It is further common to describe the optical anisotropy in terms of retardation values, which depend also on the

film thickness. The film in-plane retardation, $R_0$, equates as

$$R_0 = (n_x - n_y) \times d \qquad (3)$$

while the film out-of-plane retardation, $R_{th}$, may be represented by the equation

$$R_{th} = \left( \frac{n_x + n_y}{2} - n_z \right) \times d \qquad (4).$$

Depending on the mode of liquid crystal switching, optical retardation films with different birefringence characteristics are required to achieve the best effect with respect to wide view performance. In particular, LCD devices operated in vertically-aligned (VA) mode require the optical retardation film to exhibit a high out-of-plane birefringence and a pronounced anisotropy of the refractive index between the film plane and the thickness direction having biaxial optics in compliance with the relation $n_x>n_y>>n_z$. Optimum wide view performance of a VA-type LCD can be expected for a combination of an in-plane birefringence $(n_x-n_y) \geq 0.0008$, an out-of-plane birefringence $(n_x+n_y)/2-n_z \geq 0.004$ and $N_z$ values in a range of 2.5 to 7.0. In contrast, an LCD operated for instance under in-plane switching (IPS) mode requires optical retardation films with birefringence values as small as possible. As suitable zero-birefringence materials are practically hardly feasible, a negative A plate or positive biaxial plate with an optical anisotropy that satisfies $n_x>n_z>n_y$ being made of a low birefringence material such as a cellulose acylate are preferably employed in this case.

The birefringent properties are commonly generated by mechanical stretching of a film obtained e.g. by casting a solution of a suitable polymer to achieve the desirable amount of optical anisotropy by orientation of the polymer chains. Optical retardation films of different materials such as polycarbonates, polyarylates, cyclo olefin polymers, polyether sulphones and cellulose derivates have been obtained this way. Although the film stretching process is effective to control the in-plane birefringence, the out-of plane birefringence is hard to vary and regularly too low for certain applications such VA-mode LCDs. The latter is especially true for materials with low inherent birefringence potential such as triacetyl cellulose, which is the most widely used material for optical retardation films due to its high transparency, good adherence to PVA and adequate moisture permeability. Several strategies have been developed to overcome these limitations in order to improve retardation tuning capabilities to be able to provide optical retardation films with birefringent characteristics optimized for the respective application, in particular to provide films with high out-of plane birefringence e.g. for VA-mode LCD applications.

Numerous efforts have been spent to control the birefringence of the inexpensive and readily available TAC films beyond the limitations of mechanical stretching. The developed methods have for instance been reviewed by H. Mori in "High performance TAC film for LCDs" in Proc. SPIE, Vol. 6135, 613503 (2006) and include coating a discotic material upon a TAC film as well as modifying the out-of-plane birefringence of a TAC film by incorporating optical additives. Likewise, Nakayama et al. reported in J. Photopolymer Sci. Tech., 19 (2) (2006), 169-173 that the out-of-plane birefringence of TAC films can be adjusted to zero by the addition of suitable optical additives yielding low birefringence TAC films, which are especially useful for IPS-mode LCD applications. Other additives were found to increase the out-of-plane birefringence, which makes them attractive for optically compensated bend (OCB) mode and VA-mode LCD applications. However, the use of specialty optical additives, e.g. rod-like liquid crystal molecules, increases the total costs of film manufacturing significantly and might moreover cause problems related to optical heterogeneity of the films in the long term.

Attempts have also been made to modify the molecular structure of TAC by partly replacing the acetate substituents on the cellulose molecules with other types of acylate groups, most notably by propionate substituents, for the sake of controlling the birefringence. Optical retardation films obtained from these modified cellulose derivatives such as cellulose acetate propionate (CAP) can in fact achieve higher out-of-plane birefringence values, but the film mechanical properties, especially the modulus of the oriented films in the transverse direction, are found to be inferior compared to TAC. CAP retardation films may therefore exhibit a lack of.dimensional stability. CAP films with satisfactorily high elastic moduli in the range of 4.0-6.0 GPa and dimensional stability are described in US 2008/0227881. This improvement of the mechanical strength is supposedly achieved by increasing the density of entanglement points of the polymer chains to a level of 0.3 to 2.0 moles/$dm^3$ by using reduced drying rates upon film preparation. Nevertheless, the attainable birefringence remains still too low for VA-mode LCD applications in the light of retardation values measured at a wavelength of 590 nm of 30-100 nm for $R_0$ and 70-300 nm for $R_{th}$ in a film thickness range of 30 to 90 $\mu$m. Moreover reducing the drying rate compromises the throughput of film production, which is an important economical factor.

In US 2007/0036916 A1 cellulose derivatives wherein a part of the hydroxyl groups of the cellulose monomer

units have been substituted by aliphatic $C_{5-20}$ acyl groups are proposed for optical retardation purposes. In JP 2007-206368 a cellulose acylate material of this kind is furthermore reacted with an epoxy-functional silane coupling agent such as 3-glycidoxy propylmethoxysilane. The optical retardation films obtained from said cellulose acylate materials exhibit reverse wavelength dispersion characteristics. When modified by an epoxy-functional silane coupling agent they favorably retain their achromatic retardation characteristics even under treatments at elevated temperature and humidity. These films with a preferred thickness of 30-150 $\mu$m are claimed to be suitable for improving the viewing angle characteristics in VA-type LCDs with attainable retardation values of $R_0$($\lambda$: 550 nm): 0-50 nm and $R_{th}$($\lambda$: 550 nm): 100-300 nm. Similarly, US 2008/0107829 A1 discloses films made of a cellulosic material containing a substituent absorbing in the spectral range of 270-450 nm, which is typically an aromatic group, exhibiting also reverse wavelength dispersion of $R_0$ and allegedly allowing to control $R_0$ and $R_{th}$ in a wide range enabling their use in LCDs of various different operation modes including VA- and OCB-type LCDs. A drawback to these routes is that the materials used to prepare the optical retardation films are comparatively uncommon and expensive prohibiting wide-spread commercial application.

Another strategy for tuning the birefringence of a film is based on employing mixtures of materials. A method to adjust the wavelength dispersion of optical retardation by mixing of at least two polymers A and B which are soluble in each other and subsequent preparation of a birefringent film from this mixture by conventional solution casting and mechanical stretching has been proposed recently (cf. JP 2007-052079 A and JP 2006-282885). The polymers A and B can both be differently substituted $C_{1-4}$ cellulose acylates such as cellulose acetate and cellulose propionate with a degree of substitution in the range of 2.0 to 2.9 or alternatively one of these polymers can be a cellulose ether wherein on average 2.0-2.8 hydroxyl groups per cellulose monomer unit are substituted by a $C_{1-4}$ alkoxy group. These films lack sufficiently high birefringence values and moreover, as manifested by low $N_z$ values typically about 1, a significant optical biaxiality to be suitable for VA-mode LCD applications.

Similarly, US 2009/0273837 A1 discloses retardation films including as a first component a cellulose acylate, preferably CAP, with a specific substitution pattern and as a second component a cellulose acylate or cellulose ether with a different molecular weight and a residual degree of hydroxyl groups of at least 0.30 per cellulose monomer unit. The second component is claimed to improve the durability versus temperature change. The film retardation shows also reverse wavelength dispersion, which is favorable for desirable broadband optical retardation. However, the optical biaxiality remains again small with values of the parameter $N_z$ in the range of 1.00 to 1.20, which excludes efficient use of these films in fields where pronounced differences between in-plane and out-of-plane birefringence are essential. Eventually, a degradation of film transparency by phase segregation of the polymers could represent a problem upon long term use in case of these approaches relying on films prepared from mixtures of multiple materials.

US 2007/0009676 A1 further describes optical retardation films containing a cellulose derivative and a plasticizer exhibiting an enhanced stability versus fluctuations of the optical retardation induced by changes of environmental parameters such as humidity. The cellulose derivate is stated to be a material with low birefringence, in particular a cellulose ester wherein 2.0 to 2.6 hydroxyl groups per cellulose monomer unit have been esterified with a $C_{2-4}$ acyl group. Cellulose ethers are in principle also mentioned as suitable cellulose derivates, however, structural details such as the degree of substitution, average molecular weight and polydispersity index as well as experimental examples are only provided for cellulose esters. Thus no instructive information related to the birefringence characteristics of cellulose, ether films and their capabilities for optical retardation purposes can be inferred.

Nevertheless cellulose ether materials have explicitly been considered as materials for the production of optical retardation films previously. JP 2003-096207 describes transparent films prepared from a $C_{1-10}$ alkyl, aryl or aralkyl cellulose ether material with a degree of substitution of 0.1-3.0, most preferably in the range of 2.4-2.8, which exhibit a small wavelength dispersion of the phase contrast. The absolute values of $R_0$ and $R_{th}$ were reported to be each adjustable in a wide range, however without providing information concerning feasible combinations of the in-plane and out-of-plane birefringence or the optical biaxiality, which are coupled quantities that depend on the applied conditions of mechanical stretching.

According to WO 2010/151065 A2 an ethyl cellulose film can be used in connection with an acrylic film to constitute a multi-layer composite laminate film that is characterized by a $N_z$ value $\leq$ 1 and can be applied for retardation purposes to an in-plane switching mode LCD device.

JP 2004-157300 teaches that ethyl cellulose alone with a degree of ethyl substitution in the range of 1.9 to 2.9, can be used to produce films, which exhibit an extraordinary high anisotropy of the refractive index between the film plane and the thickness direction. This is particularly evidenced by values of the parameter $N_z$ of about 100 attained for the working examples wherein ethyl cellulose materials with a degree of substitution of 2.3-2.6 are employed. Thus the potential of ethyl cellulose to achieve substantially higher out-of-plane birefringence compared to TAG films is demonstrated, however the birefringent characteristics of the films disclosed in JP 2004-157300 are not yet ideal for VA-type LCD application since e.g. the optical biaxiality is too high.

Hence, there remains a technological need for novel optical retardation films with better birefringence tuning ability specifically for providing a high out-of-plane birefringence and good long term durability in an economically attractive

manner suitable for mass production without the use of expensive additives or exotic materials. In particular optical retardation films fulfilling the requirements for VA-type LCD applications, i.e. exhibiting a combination of an in-plane birefringence ($n_x$-$n_y$) ≥ 0.0008, an out-of-plane birefringence ($n_x$+$n_y$)/2-$n_z$ ≥ 0.004 and $N_z$ values in a range of 2.5 to 7.0 are sought. Due to their envisioned use, the films are required to have a high transparency and low haze. As these characteristics could be compromised by crystallization, the films should be amorphous. It is moreover desirable that they exhibit adequate mechanical stability, compatibility with other optical materials used in LCD manufacturing such as PVA and favorably achromatic retardation dispersion.
Through an extensive study of the optical properties of cellulosic materials and different film fabrication methods, the inventors have surprisingly found that economically attractive cellulose ether materials with a particular compositional range are able to provide novel optical retardation films fulfilling at least some of the above-defined demands without using any optical additives nor any acyl group substitution on the cellulose ring structure.

The present invention therefore relates to an optical retardation film according to claim 1.

Specifically, it is found that alkyl cellulose ether materials with a degree of alkyl substitution in the range of 2.00 to 2.25, in particular ethyl cellulose, can be used to fabricate amorphous optical retardation films of low haze with a combination of an in-plane birefringence ($n_x$-$n_y$) ≥ 0.0008, an out-of-plane birefringence ($n_x$+$n_y$)/2-$n_z$ ≥ 0.004 and $N_z$ values in a range of 2.5 to 7.0. Such retardation films are useful for improving the wide view performance of certain LCDs, especially of LCDs operated by the vertically aligned (VA) mode.

The invention is further related to a method of manufacturing an optical retardation film according to the invention wherein the method comprises:

- providing a solution comprising the cellulose derivative and optional additives in an organic solvent,
- casting said solution onto a support,
- drying the cast film at least partially, and then
- stretching the film mechanically in at least one direction,
- optionally holding the stretched film under tension for a period of time.

Moreover the present invention relates to a liquid crystal display or an imaging device comprising an optical retardation film according to the invention.

Further features and advantages of the invention will be explained in detail below.

The cellulose derivative used to manufacture the optical retardation film according to the invention means a compound having a cellulose skeleton, i.e. a structure of D-glucopyranose units connected by β-1,4 glycosidic bonding, which is chemically modified by introducing pendant ether functionalities. The terms cellulose ether material, cellulosic ether material, cellulose ether, alkyl cellulose ether material and alkyl cellulose or respective terms identifying specific examples such as ethyl cellulose are thus interchangeably used to denote the cellulose derivative according to the present invention.

The pendant ether functionalities are introduced by substitution of hydroxyl groups by alkoxy groups at the 2-, 3- and/or 6-position of the glucopyranose repeating units. Correspondingly, the groups $R_2$, $R_3$ and $R_6$, which denote the substituent covalently bond to oxygen at the 2-, 3-and 6-position of the glucopyranose repeating units in formula (I), each independently may represent a hydrogen atom or an alkyl group and may be the same or different from each other among the repeating units.

The alkyl group can be a linear or branched, acyclic or cyclic aliphatic hydrocarbon group comprising 1 to 20 carbon atoms ($C_{1-20}$ alkyl group), preferably 1 to 8 carbon atoms ($C_{1-8}$ alkyl group) or most preferably 1 to 4 carbon atoms ($C_{1-4}$ alkyl group). Suitable alkyl groups are thus exemplified by methyl, ethyl, n-propyl, isopropyl, n-butyl, sec-butyl, tert-butyl, n-pentyl, sec-pentyl, neo-pentyl, n-hexyl, sec-hexyl, cyclohexyl, n-heptyl, n-octyl, 2-ethylhexyl, n-nonyl, n-decyl, n-undecyl, n-dodecyl, n-tridecyl, n-tetradecyl, n-pentadecyl, n-hexadecyl, n-heptadecyl; n-octadecyl, n-nonadecyl, n-eicosyl and the like. Linear acyclic alkyl groups are preferable, in particular linear $C_{1-4}$ alkyl groups such as methyl, ethyl, propyl and butyl. The alkyl group can further be substituted or unsubstituted. If substituted, the alkyl group may contain for instance one or more functional groups independently selected from hydroxyl, ether, thiol, thioether, amine, ester, amid, cyano, isocyanate, thioisocyanate, carbamate, epoxy and halogen, not intended to be limiting. Preferably the alkyl group is unsubstituted. The cellulose derivative used in the invention may contain a single type of alkyl substituent or more than one type, i.e. mixed substitution with distinct alkyl substituents. Preferably only a single type of alkyl substituent is present in the cellulose derivative.

In one specific embodiment the alkyl group of the cellulose derivative, which is comprised within the optical retardation film of the invention, is thus a $C_1$-$C_4$ alkyl group, which can be linear or branched, substituted or unsubstituted.

Accordingly, suitable cellulose derivatives are e.g. methyl cellulose, ethyl cellulose, hydroxy ethyl cellulose, hydroxy propyl cellulose, cyano ethyl cellulose or as examples for cellulose derivatives with more than one type of alkyl substituent methyl ethyl cellulose, ethyl propyl cellulose or ethyl hydroxy ethyl cellulose. In a particularly preferred embodiment said alkyl group is an ethyl group, i.e. the cellulose derivative is an ethyl cellulose ether material.

As formula (I) indicates at least a part of the hydrogen atoms of the hydroxyl groups at the 2-, 3- and 6-position of the glucopyranose repeating units of the parent cellulose compound is substituted by the alkyl groups specified above, i.e. the hydroxyl groups are replaced by alkoxy groups, in the cellulose derivative used in the present invention. The average number of hydroxyl groups per repeating unit which are in total replaced by alkoxy groups at the 2-, 3- and 6-position of the glucopyranose units is designated as the degree of substitution (DS). In case all hydroxyl groups are replaced by alkoxy groups, the degree of substitution would for instance be 3.0. According to the present invention cellulose derivatives with a degree of substitution in a range of 2:00 to 2.25 can be employed to achieve optical retardation films providing the desirable combination of optical properties considered optimum for VA-type LCD applications. The degree of substitution may for instance be determined by $^{1}$H-NMR and $^{13}$C-NMR adapting the methods described in Cellulose Communication, 6 (1999), 73-79 and Chirality, 12 (9), 670-674. In the particular case of ethyl cellulose the degree of substitution may moreover be quantified in accordance with the method described in ASTM-D4794-94 or, as described in detail in the examples, in accordance with United States Pharmacopeia (USP) XXXII - National Formulary (NF) XXVII monograph "Ethylcellulose", section "Assay" by reaction with an excess of hydroiodic acid, extraction and quantifiable detection of the liberated ethyl iodide by gas chromatography combined with flame ionization detection.

The glucopyranose repeating units according to formula (I) may be 1,4-β-glycosidically linked to form acyclic or cyclic polymer chains, or a mixture thereof, constituting the cellulose derivative. Typically the cellulose derivative substantially comprises acyclic polymer chains of the 1,4-β-glycosidically bound repeating units according to formula (I). With respect to the terminal glucopyranose rings of acyclic polymer chains constituting the cellulose derivative, the hydroxyl group at the 1- or 4-position may have a substituent or not, and the kind of substituent is not particularly limited, although being preferably the same as the pendant ether groups with the corresponding oxygen-bond alkyl groups as defined above.

The cellulose derivative useful in the present invention can be prepared according to publicly known methods from a suitable cellulose raw material such as cotton linter, wood pulp (broad-leafed pulp or coniferous pulp), crystalline or microcrystalline cellulose, cellulose hydrate, regenerated cellulose or rayon. Mixtures of a plurality of different cellulose raw materials may be employed as well. Preparation methods that can be used to obtain the cellulose derivatives according to the present invention are described for instance in

"Comprehensive Cellulose Chemistry", Volume 2, Wiley-VCH, 2001. In a common approach the cellulose raw material is typically first mechanically ground and then treated with aqueous alkali such as an aqueous solution of NaOH or KOH, or a caustic soda solution to yield water soluble alkali cellulose. The alkali cellulose may subsequently be reacted with an etherification agent, which can be for instance an alkyl halide such as methyl chloride or ethyl chloride or an epoxide such as ethylene oxide or propylene oxide, to yield a cellulose derivative wherein at least a part of the hydroxyl groups at the 2-, 3- and 6-position of the glucopyranose repeating units have been converted to alkoxy functionalities yielding a cellulose ether material. After neutralization and the removal of by-products such as alkali halide and residual educts e.g. by extraction the cellulose ether material may be dried and processed into a granular material or fine powder for further use in subsequent process steps. For obtaining a cellulose derivative useful in the present invention, the etherification agent needs to be selected in a way that the alkyl group it transfers to the cellulose parent compound corresponds to an alkyl group as described beforehand. An alkyl halide and/or an epoxide wherein the comprised alkyl moiety is an alkyl group as specified above for $R_2$, $R_3$ arid $R_6$ in formula (I) could be employed for instance. If a cellulose derivative is desired wherein hydroxyl groups of the cellulose shall be substituted by more than one type of alkoxy group, a mixture of more than one compound of such kind, e.g. a mixture of methyl chloride and ethyl chloride, could be utilized as etherification agent or the alkali cellulose may be reacted successively with distinct etherification agents. In a non-limiting embodiment ethyl cellulose materials may thus be prepared by reaction of alkali cellulose with ethyl chloride. Ethyl cellulose materials with an ethoxyl content of 45.0 to 49.5 wt.% are commercially available under the tradename ETHOCEL by The Dow Chemical Company. They represent thermoplastic, water-insoluble, organosoluble polymers appreciated as tough, flexible film forgers, excellent water barriers, binders and rheology modifiers in a variety of different applications including pharmaceuticals, personal care, food and electronics industry.

It is possible to obtain a cellulose derivative with the desired degree of alkyl substitution, i.e. DS in a range of 2.00 to 2.25, in a preparation process of the manner described above directly by adjusting the equivalent ratio of etherification agent to alkali cellulose in the reaction medium accordingly. Alternatively, an excess of etherification agent sufficiently large to convert substantially all hydroxyl groups of the alkali cellulose to alkoxy groups (DS $\geq$ 2.99) may be employed, followed by a partial hydrolysis of the pendant ether functionalities. The partial hydrolysis may be conducted by subjecting the cellulose ether material in aqueous suspension to an acid catalyst such as dilute or concentrated hydrogen halide acid, sulfuric acid, nitric acid or mixtures thereof in an acid resistant vessel at temperatures of 40 to 150°C. Using $BX_3$ (X: Br, Cl, I) as catalyst the hydrolysis may also be carried out at room temperature. The reaction

time is adjusted to achieve the desired degree of substitution. The hydrolysis reaction may be terminated by neutralization with an aqueous alkaline solution such as sodium hydroxide solution.

The hydrolysis of the pendant ether groups is commonly accompanied by a cleavage of the β-1,4 glycosidic bonding of the D-glucopyranose units constituting the cellulose skeleton. Frequently, this depolymerization is the dominant reaction or conditions may be found that enable selective depolymerization of the cellulose skeleton without cleavage of the pendant ether functionalities. The hydrolysis reaction may thus be utilized to adjust the degree of polymerization of the cellulose derivative after etherification. Alternatively, the degree of polymerization of the starting raw cellulose material used to obtain the cellulose derivative according to the present invention may, if required, be reduced to the desired level prior to etherification by hydrolysis. Suitable processes for the depolymerization of cellulose are described for instance in detail in US 1,679,943, US 2,413,802, US 2001/0020090 A1 and EP 0210917 A2. The average number of connected glucopyranose repeating units constituting a molecule of the cellulose derivative useful to the manufacture of an optical retardation film of the present invention, i.e. the degree of polymerization, denoted as m, is typically not less than 75, preferably not less than 100 and more preferably not less than 200 and not more than 2,000, preferably not more than 1,000 and more preferably not more than 500, although not being limited to these ranges. Ranges between all cited values may be suitable according to the invention. In one preferred embodiment m may for instance be in the range of 150 to 500. The degree of polymerization may be deduced from the number average molecular weight, $M_n$, as

$$m = \frac{M_n}{[(28g/mol \times DS) + 162g/mol]}.$$

The molecular weight distribution of the cellulose derivative is not particularly limited, but it is preferable that the polydispersity index, i.e. the ratio of the weight average molecular weight, $M_w$, and the number average molecular weight, $M_n$, is less than 5.0 and more preferably in the range of 1.5 to 3.5. The molecular weight distribution from which the average molecular weight data ($M_n$ and $M_w$) and the dependent polydispersity index are available can be determined experimentally by gel permeation chromatography (GPC). The weight average molecular weight, $M_w$, of the cellulose derivative used in the invention as determined by gel permeation chromatography (according to the procedure outlined in the 'Molecular Weight Determination' section of this document) is preferably 17,500 g/mol or more, more preferably in the range of 17,500 to 500,000 g/mol, even more preferably in the range of 25,000 to 200,000 g/mol and most preferably in the range of 50,000 to 120,000 g/mol. Within the foregoing ranges the cellulose derivative and mixtures, melts and/or solutions derived thereof that find use in the manufacture of the inventive optical retardation films exhibit adequate viscosity and yield films of favorable mechanical properties. In case of a cellulosic material with a weight average molecular weight below 17,500 g/mol, the obtained films typically may lack sufficient mechanical strength being too brittle. Employing a cellulose derivative with a weight average molecular weight above 500,000 g/mol may result in a too high viscosity compromising workability in the film manufacturing process.

A mixture of two or more cellulose derivatives as specified above, e.g. a mixture of methyl cellulose and ethyl cellulose, can be employed, although it is preferable to use a single cellulose derivative to prepare the optical retardation films of the present invention.

The total amount of the above-identified cellulose derivative(s) in the optical retardation film is at least 20 wt.%, preferably at least 50 wt.% and more preferably at least 70 wt.% based on the total weight of solids.

In addition to the cellulosic material, the optical retardation film may optionally comprise one or more additives commonly used in such optical films. Such additives include without being limiting e.g. plasticizers, thermal stabilizers, antioxidants, ultraviolet light absorbers, peroxide decomposing agents, radical inhibitors, metal inactivating agents, acid scavengers, retardation enhancing agents and fine particles and polymers other than the cellulose derivative described above. The physical condition of the additives is not particularly limited, meaning they could be employed in solid or liquid form, neither are their boiling or melting points particularly limited unless indicated to the contrary. Preferentially additives are selected which have excellent chemical compatibility with the cellulose derivative according to the present invention also on the long term, avoiding segregation and leaching phenomena, and yield optical retardation films with a light transmittance of 85% or more, preferably 90% or more and more preferably at least 92% or more.

In a specific embodiment the optical retardation film comprises at least one additive selected from a polymer other than the cellulose derivative as set forth above, a plasticizer, an UV absorber, a thermal stabilizer, fine particles and a retardation enhancing agent or a mixture thereof.

Polymers other than the cellulose derivative as set forth above, which may be used for the manufacture of the optical retardation film of the present invention are exemplified by phenolic resins, coumarone indene resins, vinyl ester polymers, colophony and derivatives thereof, alkyd resins, aminoplast resins such as those of the urea formaldehyde-type or melamine formaldehyde-type, natural polymers, optionally modified, such as cellulose derivatives other than those according to formula (I), e.g. cellulose acylates like triacetyl cellulose or cellulose acetate propionate. The optical retardation film according to the present invention may comprise up to 70 wt.%, preferably less than 40 wt.%, more

preferably less than 20 wt.% based on the total weight of solids of polymers other than the cellulose ether material set forth above. If incorporated into the film, a single type of the other polymer or a mixture of two or more such polymers may be utilized.

A plasticizer can be added to improve workability and flexibility of the optical retardation film. It may lower the glass transition point and melting temperature of the material the film is formed from, which could facilitate lower temperature and/or simplified film manufacturing. The plasticizer should be compatible with cellulose derivative set forth above and have a boiling point higher than the maximum temperature applied in the film preparation and conditioning process requiring in particular nonvolatile plasticizer compounds in the case of film formation by melt casting. Eligible plasticizers include without being limiting phosphoric acid esters, carboxylic acid esters including phthalic acid esters, alkyl phthalyl alkyl glycolates, citric acid esters, glycerides, esters and amides of fatty acids, trimellitic esters, castor oil or derivatives thereof, camphor, polyvalent alcohols and esters thereof.

Examples of suitable phosphoric acid esters are triphenyl phosphate, tricresyl phosphate and cresyldiphenyl phosphate.

Phthalate plasticizers useful in the present invention may be exemplified by dimethyl phthalate (DMP), diethyl phthalate (DEP), dibutyl phthalate (DBP), dioctyl phthalate (DOP), diphenyl phthalate (DPP), dicyclohexyl phthalate, benzyl phthalate, diethylhexyl phthalate (DEHP).

Suitable alkyl phthalyl alkyl glycolates include methyl phthalyl methyl glycolate, ethyl phthalyl ethyl glycolate, propyl phthalyl propyl glycolate, butyl phthalyl butyl glycolate, octyl phthalyl octyl glycolate, methyl phthalyl ethyl glycolate, ethyl phthalyl methyl glycolate, ethyl phthalyl propyl glycolate, methyl phthalyl butyl glycolate, ethyl phthalyl butyl glycolate, butyl phthalyl methyl glycolate, butyl phthalyl ethyl glycolate, propyl phthalyl butyl glycolate, butyl phthalyl propyl glycolate, methyl phthalyl octyl glycolate, ethyl phthalyl octyl glycolate, octyl phthalyl methyl glycolate and octyl phthalyl ethyl glycolate.

Useful citric acid ester plasticizers are for instance triethyl O-acetylcitrate (OACTE), tributyl O-acetylcitrate (OACTB).

Fatty acid based plasticizers, which may be employed to obtain the optical retardation film according to the present invention comprise e.g. butyl oleate, butyl stearate, methylacetyl ricinolate, butyl ricinoleate, dibutyl sebacate and glycol esters of coconut oil fatty acids.

Eligible polyvalent alcohol plasticizers are exemplified by glycerine, ethylene glycol, 1,2-propanediol, 1,3-propanediol, sorbitol, trimethylolpropane, xylitol, triethyleneglycol, tetraethyleneglycol. Examples for polyvalent alcohol ester plasticizers can be found for instance in paragraph [0077] of US 2007/0009676 A1.

Phthalic acid esters are preferably employed as plasticizer for the optical retardation film according to the invention.

A single plasticizer or a mixture of two or more plasticizers may be employed. If plasticizer is incorporated in the optical retardation film, it is added in an amount corresponding in total to 0.5-30 wt.%, preferably 1-20 wt.%, more preferably 3-15 wt.% based on the total weight of solids. If the optical retardation film comprises more than 30 wt.% of plasticizer based on the total weight of solids the film quality deteriorates by bleed out of plasticizer from the film. Incorporation of plasticizer at concentration levels below 0.5 wt.% based on the total weight of solids on the other hand yields hardly any effect.

As a thermal stabilizer particularly phenol type compounds, phosphite based compounds and/or thioether based compounds are useful in the present invention. Also a compound having more than one functionality selected from a phenolic hydroxyl group, a phosphate group and a thioether group can be employed. Additional other functional groups can be present. Typically, these compounds may prevent or delay deterioration of the optical retardation film or the material it is formed from during the film preparation, hence qualifying also as antioxidants.

Phenol type thermal stabilizers are herein typically hindered phenol-based compounds, particularly compounds wherein at least one substituted or unsubstituted $C_{1-20}$ alkyl group such as a methyl group, an ethyl group, a propyl group, an isopropyl group, a n-butyl group, a sec-butyl group, a tert-butyl group, a pentyl group, an isopentyl group, a tert-pentyl group, a hexyl group, a Heptyl group, an octyl group, an isooctyl group or a 2-ethylhexyl group is present as substituent adjacent to a phenolic hydroxyl group. Examples include octylphenol, butylated hydroxyphenol, 2,6-di-tert-butyl-p-cresol, triethylene glycol-bis-[3-(3-tert-butyl-5-methyl-4-hydroxyphenyl propionate] and Irganox 1076, Irganox 1010, Irganox 3113, Irganox 245, Irganox 1135, Irganox 1330, Irganox 259, Irganox 565 Irganox 1035, Irganox 1098 wherein the compounds sold under the trademark Irganox are commercially available from Ciba Specialty Chemicals Co..

Eligible phosphite based thermal stabilizers are e.g. ADK STAB 1178, ADK STAB 2112, ADK STAB PEP-8, ADK STAB PEP-24G, ADK STAB HP-10 commercially available from Adeka Palmarole. ADK STAB AO 412S also commercially available from Adeka Palmarole is an example of a thioether based compound that may be used as a thermal stabilizer for the optical retardation films according to the invention.

If used, the thermal stabilizer may be incorporated to the optical retardation film as a single compound or a mixture of more than one such compound in an amount corresponding to 0.01-5.0 wt.%, preferably 0.05 - 1 wt.% based on the total weight of solids.

The optical retardation film may comprise further an ultraviolet light absorber, i.e. a compound which absorbs light in the UV spectral region at wavelengths between 290 nm and 380 nm, preferably without significant light absorption in the visible spectral range at wavelengths above 400 nm.

Such compounds useful as UV light absorber comprise e.g. benzophenone derivatives, benzotriazole derivatives, 1,3,5-triazine derivatives, salicylates, cinnamates, oxanilides, cyanoacrylates, benzoate derivatives and dibenzoyl methane derivatives.

Eligible benzophenone derivatives that impart UV absorption include for instance 2,4-dihydroxy benzophenone, 2,2'-dihydroxy-4-methoxy benzophenone, 2-hydroxy-4methoxy-5-sulfobenzophenone, bis(2-methoxy-4-hydroxy-5-benzoyl phenyl methane) and SEESORB 100, SEESORB 101, SEESORB 101S, SEESORB 102, SEESORB 103, the latter compounds marketed under the trademark SEESORB being commercially available from Shipro Kasei Kaisha, Ltd..

Benzotriazole derivatives useful as UV light absorbers may be exemplified by 2-(2'-hydroxy-5'-methylphenyl) benzotriazole, 2-(2'-hydroxy-3',5'-di-tert.-butyl phenyl) benzotriazole, 2-(2'-hydroxy-3'-tert.-butyl-5' methylphenyl) benzotriazole, 2-(2'-hydroxy-3',5'-di-tert.-butyl phenyl) 5-chloro benzotriazole and the benzotriazole derivatives TINUVIN P, TINUVIN 234, TINUVIN 320, TINUVIN 327, TINUVIN 328, Tinuvin 171, Tinuvin 109, Tinuvin 326 available from Ciba Specialty Chemicals Co.

Suitable triazine-based UV light absorbers are e.g. 2-hydroxyphenyltriazines, UVINUL T150 commercially available from BASF and Uvasorb HEB marketed by 3V Sigma.

Further, UV light absorbers that may be incorporated into the optical retardation film of the invention are exemplified by the salicylate derivatives SEESORB 201, SEESORB 202 available from Shipro Kasei Kaisha, Ltd., octyl-p-methoxy-cinnamate, ethyl cinnamate, diisopropyl methyl cinnamate and TINUVIN 312 and TINUVIN 315 available from Ciba Specialty Chemicals Co. as examples of suitable oxanilides. Moreover examples of cyanoacrylate UV light absorbers include 2-ethylhexyl 2-cyano-3,3-diphenyl-2-propenoate, SEESORB 501 available from Shipro Kasei Kaisha, Ltd. or UVINUL N-539 distributed by BASF. Eventually, diethylamino hydroxybenzoyl hexyl benzoate is an example of an eligible benzoate derivative while tert-butyl p-methoxydibenzoylmethane available as Eusolex 9020 from Merck KGaA is exemplifies a UV light absorber of the dibenzoyl methane type.

If employed, the ultraviolet light absorber may be incorporated in the optical retardation film according to the invention in the form of a single compound or a mixture of two or more suitable compounds, and in an amount corresponding to 0.01-5 wt.%, preferably 0.05 - 1 wt.% based on the total weight of solids. The UV light absorber can for instance protect liquid crystal molecules from UV-induced deterioration when an optical retardation film comprising such UV light absorber is implemented into a LCD device.

The fine particles that could be incorporated to the optical retardation film of the present invention should generally have an average particle size of the primary particles of less than 25 nm, preferably less than 20 nm and more preferably less than 15 nm to in order to yield the optical retardation films of low haze and high transparency according to the invention. The primary particles commonly form secondary particles by aggregation, which partly protrude at the film-air interface resulting in an unevenness of the film surface that may impart sliding properties to the film. The secondary particles should generally exhibit an average particle size in the range of 0.1-3.0 $\mu$m, preferably 0.2-1.5 $\mu$m and more preferably 0.5-1.0 $\mu$m. The primary and secondary particle size is each defined in terms of the diameter of the smallest possible circle that encloses the respective particle completely and touches its outer contours in a two-dimensional electron microscopic image. The skilled artisan knows how to prepare adequate electron microscopic images e.g. by collecting the particles from an aerosol or from a suspension on a suitable support and subsequent imaging using a scanning electron microscope or a transmission electron microscope, and is aware how to calculate physical dimensions from the acquired images taking into account the magnification ratio. Determination of the respective average particle size relies on determining the particle size of at least 500 individual particles of the respective type as set forth above and calculating the number averaged particle size.

The fine particles can be inorganic and/or organic particles. Suitable inorganic particles comprise metal oxide particles, e.g. particles of silicon dioxide, titanium dioxide, zinc oxide, tin oxide, magnesium oxide, barium oxide, molybdenum oxide, vanadium oxide, indium oxide, aluminum oxide, zirconium oxide, calcium carbonate, talc, clay, calcined kaolin, calcined calcium silicate, hydrated calcium silicate, aluminum silicate, magnesium silicate or calcium phosphate. Fine particles of organic material include polymer particles e.g. made of acrylic resin or a silicone resin such as Tospearl 103, Tospearl 105, Tospearl 108, Tospearl 120, Tospearl 145, Tospearl 3120 or Tospearl 240 marketed by Toshiba Silicone Co., Ltd.. Silicon dioxide particles are preferable as they favorably enable the preparation of an optical retardation film with low turbidity and small haze. Suitable silicon dioxide particles are for instance Aerosil R972, Aerosil R972V, Aerosil R974, Aerosil R812, Aerosil 200, Aerosil 200V, Aerosil 300, Aerosil R202, Aerosil OX50 or Aerosil TT600 commercially available from Nippon Aerosil Co., Ltd..

The fine particles can be surface treated or untreated. They might e.g. be subjected to a glow discharge or corona discharge plasma treatment. Alternatively their surface may be modified by a chemical treatment with a coupling agent reactive with functional groups at the particle surface. An organoalkoxy metal compound represents for instance a suitable type of coupling agent, e.g. organosilanes may be utilized to modify the surface chemistry of fine particles as

specified above.

A single type of fine particles or a mixture of different types of fine particles as specified above may incorporated to the inventive optical retardation film. If employed, the fine particles may be incorporated into the film in an amount corresponding to at most 30 wt.%, preferably less than 20 wt.%, more preferably 0.5-10 wt.% based on the total weight of solids.

The optical retardation films of the present invention may moreover comprise a retardation-enhancing agent. As used herein, "retardation enhancing agent" means an additive that can alter an optical polymer film's in-plane retardation $R_0$ or out-of-plane retardation $R_{th}$ by at least 20 nm compared to the same optical polymer film without the use of a retardation enhancing agent. The amount of retardation-enhancing agent, which can be incorporated into the film in the form of a single compound or a mixture of different compounds, is preferably within a range of from 0.1 wt % to 30 wt %, more preferably from 0.2 wt % to 20 wt % and still more preferably from 0.5 wt % to 15 wt %, in each case based upon the total weight of solids.

Illustrative retardation-enhancing agents include compounds having a rod shape or a disc shape. These agents typically have at least two aromatic rings. Rod-shaped compounds preferably have a linear molecular structure. The rod-shaped compounds also preferably exhibit liquid crystal properties, especially when heated (i.e., thermotropic liquid crystal). Liquid crystal properties appear, for example, in a liquid crystal phase, preferably a nematic phase or smectic phase. A number of references discuss rod-shaped compounds, cf. for instance J. Amer. Chem. Soc., vol. 118 (1996), page 5346; J. Amer. Chem. Soc., vol. 92 (1970), page 1582; Mol. Cryst. Liq. Cryst., vol. 53 (1979), page 229; Mol. Cryst. Liq. Cryst., vol. 89 (1982), page 93; Mol. Cryst. Liq. Cryst., vol. 145 (1987), page 111; Mol. Cryst. Liq. Cryst., vol. 170 (1989), page 43; and Quarterly Review of Chemistry by The Chemical Society of Japan, No 22, 1994.

Disc-shaped retardation compounds preferably have an aromatic heterocyclic group in addition to an aromatic hydrocarbon ring. Examples of suitable retardation-enhancing agents include benzene derivatives as disclosed by C. Destrade et al. in Molecular Crystallography, vol. 71 (1981), page 111; truxene derivatives disclosed by C. Destrade et al. in Molecular Crystallography, vol. 122 (1985), page 141; cyclohexane derivatives reported by B. Kohne et al. in Angew. Chem., vol. 96 (1984), page 70; and azacrown-based and phenylacetylene-based macrocycles disclosed by J. Zhang et al. in J. Am. Chem. Soc., vol. 116 (1994), page 2655.

The optical retardation film according to the invention, comprising the foregoing cellulose derivative and optionally one or multiple additives as specified above, preferably has a haze measured in accordance with ASTM D-1003 by means of a haze meter (haze-gard plus, 13YK-Garner) of no more than 2%, preferably of no more than 1.5%, more preferably no more than 1%. Its average percent spectral transmittance as measurable in accordance with ASTM E-1348 using a spectrophotometer in a wavelength range of from 380 to 780 nm is typically at least 85%, preferably at least 90% and more preferably 92% or more. If the average percent spectral transmittance is below 85% and/or the haze is above 2%, displays that include such optical retardation film attain dissatisfactory brightness, which remains too low.

The films according to the present invention are preferably amorphous and do not crystallize also under the conditions of an orientation treatment applied to generate birefringence of the film, typically by mechanical stretching at elevated temperature about the glass transition point. Crystallization and or micro-crystallization of cellulosic films as detectable by differential scanning calorimetry (DSC) is commonly undesirable for optical applications as it may result in inappropriate haze and light transmittance outside the preferential ranges specified above and may impair the reproducibility of the generation of film birefringence, i.e. the retardation characteristics.

The optical retardation characteristics of the films can be determined using a birefringence meter such as an EXICOR™ 150ATS (Hinds Instrument). The optical retardation characteristics and refractive index data each refer to a specific wavelength, e.g. a wavelength of 546 nm, and ambient conditions, i.e. room temperature (about 75°F) and a relative humidity of about 50% unless indicated otherwise in the present invention. $R_0$ is measured by shining light incident in the direction of the surface normal of the film onto the planar surface of the film. Additionally, the optical retardation at oblique light incidence, $R_{40}$, can be measured by tilting the film 40° against the direction of the surface normal of the film, wherein the in-plane axis that is parallel to the slow axis served as rotation axis. From the measured values of $R_0$ and $R_{40}$ the three dimensional refractive indices $n_x$, $n_y$ and $n_z$, with x and y defining the film plane, wherein x represents the direction of the slow axis and y the axis perpendicular thereto, and z denoting the thickness direction, can be calculated allowing further to determine $R_{th}$ and the parameter $N_z$ characterizing the optical biaxiality according to equation (4) and equation (2), respectively. The film thickness, d, and the average refractive index, no, of the film material are additionally required as input parameters for this calculation.

The film thickness can be measured by common techniques, e.g. by means of a micrometer screw. The optical retardation film according to the invention typically has a thickness, in the range of 1 μm to 150 μm, preferably in the range of 15 μm to 150 μm, more preferably in the range of 25 μm to 120 μm, even more preferably in the range of 40 μm to 120 μm, particularly preferably in the range of 50 μm to 120 μm, most preferably in the range of 60 μm to 100 μm. A film with a thickness of less than 1 μm leads to handling and post-processing challenges, especially in lamination. A film with a thickness in excess of 150 μm increases costs, relative to a film with a thickness of from 1 μm to 150 μm,

and may also have a retardation that is too high for use as optical retardation film.

The average refractive index of the material, which the film consists of, may be determined experimentally using an Abbe refractometer or a hypothetical value may be assumed for no based on refractive index values tabulated in data collections of polymer materials' optical properties such as "Polymers: A property database" (www.polymersdatabase.com) or the TexLoc Refractive Index of Polymers Library (www.texloc.com). For instance, the average refractive index value listed in the latter is 1.54 for cellulose, 1.48 for cellulose acetate and 1.48 for ethyl cellulose.

The optical retardation films according to the present invention, which have been subjected to an orientation treatment to generate optical anisotropy e.g. by uniaxial and/or biaxial mechanical stretching, preferably exhibit each at a wavelength of 546 nm an in-plane birefringence $(n_x-n_y) \geq 0.0008$, more preferably $\geq 0.0012$, an out-of-plane birefringence $(n_x+n_y)/2-n_z \geq 0.004$, more preferably $\geq 0.005$, and/or optical biaxiality with the parameter $N_z$ as expressed in equation (2) in a range of 2.5 to 7.0, more preferably in a range of 3.0 to 6.0. Herein, as well as in the following, $n_x$ is the refractive index for the direction having the highest refractive index in the film plane (x-direction), $n_y$ is the refractive index in the direction perpendicular to the x-direction in the film plane and $n_z$ is the refractive index along the film thickness direction.

Such films may have in-plane retardation $R_0$ as expressed in equation (3) in the range of 25 to 250 nm, preferably in the range of 40 to 200 nm and/or retardation in the thickness direction $R_{th}$ as expressed in equation (4) of at least 100 nm, preferably of at least 125 nm, more preferably of at least 200 nm, even more preferably of at least 300 nm, each at a wavelength of 546 nm. Typically the standard deviation of the retardation values is less than 15 nm, preferably less than 12 nm, more preferably less than 10 nm, and still more preferably less than 5 nm. If the standard deviation for $R_0$ or $R_{th}$, is too high, e.g. in excess of 15 nm, viewing angle performance of a device that incorporates such an optical retardation film tends to decrease to an unacceptable level.

In a preferred embodiment of the present invention, the optical retardation film has an in-plane birefringence $(n_x-n_y)$ at a wavelength of 546 nm in the range of 0.0008 to 0.003, an out-of plane birefringence $((n_x+n_y)/2-n_z)$ at a wavelength of 546 nm of at least 0.004, preferably in the range of 0.004 to 0.015, and an optical biaxiality with the parameter $N_z$ as expressed in equation (2) in the range of 2.5 to 7.0 at a wavelength of 546 nm. Herein, it is even more preferable that the in-plane birefringence $(n_x-n_y)$ is in the range of 0.0012 to 0.0026 and/or the out-of plane birefringence $((n_x+n_y)/2-n_z)$ is at least 0.005, more preferably in the range of 0.005 to 0.012, and/or $N_z$ is in the range of 3.0 to 6.0 at a wavelength of 546 nm each. These films may exhibit values of in-plane and out-of-plane retardation, $R_0$ and $R_{th}$, as cited above.

Moreover, the films according the invention as set forth above are mechanically stable and durable. They are compatible with a variety of other polymeric materials frequently used in manufacturing of optical elements such as PVA-based materials commonly used for polarizers. Hence the optical retardation film can be a single layer film or be comprised as at least one constituting layer in a multilayer film.

Optical retardation films according to the invention as specified above may be prepared by any usual method for producing a film based on a cellulose ether material. Thus, such films may e.g. be obtained by casting a solution (dope) wherein the cellulose ether material is dissolved in an organic solvent onto a support and subsequent vaporization of the solvent. Alternatively, instead of a solution, an emulsion of the cellulose ether material in water may be cast onto a support to form a film upon drying. An emulsion with finely dispersed particles could be prepared e.g. by melting the hydrophobic cellulose ether material and subsequent mixing with hot water. Moreover, films according to the invention could be produced by melt casting. Additives, if used, may be incorporated prior to the film production process upon preparation of the cellulose ether material or at different stages of the film production process, e.g. upon preparation of the dope, emulsion or melt of the cellulose ether material or by subsequent admixing prior or during casting. It is preferred that the optical retardation film according to the invention is formed by solution casting. The process steps of dope preparation and solution casting are commonly known by the industry and can be found in the literature, e.g. in Ulrich Siemann, "Solvent cast technology - a versatile tool", Progress in Colloid and Polymer Science, volume 130 (2005), page 1-14.

By any of the foregoing production methods such as solution, melt extrusion or melt casting an "unoriented" film is obtainable without further means. "Unoriented" means that preparation of the film does not involve an additional orientation treatment of the film by stretching it under heat, e.g. at a temperature at or above the glass transition temperature of the material used to make the film. Skilled artisans recognize that some degree of orientation inevitably occurs in a cast film during one or both film casting itself and winding of a cast film into a roll for further processing. Such inevitable degree of orientation is included in the definition of the "unoriented" state in the present invention.

Although, the films according to the present invention may be utilized in the "unoriented" state, it is preferable to subject these films to an orientation treatment by mechanical stretching in at least one direction to generate birefringence of the film, i.e. to achieve a desirable combination of optical in-plane and out-of-plane birefringence respectively retardation values ($R_0$ and $R_{th}$) and optical biaxiality ($N_z$) as specified above. Thus, preparation of a "stretched" (or "oriented") film comprises an additional orientation treatment that involves orienting or stretching a film, either uniaxially or biaxially, at a temperature at or above the glass transition temperature of the material used to make the film. The stretching can be carried out on-line during the process of film formation, i.e. casting and progressing drying, gel formation and/or solidification, or may be carried out off-line after the formation of the film is complete. Comprehensive information on well-known methods of film orientation or film stretching can be found e.g. in a monograph entitled "Plastic Films" by John H. Briston, Chapter 8, page 87-89, Longman Scientific & Technical (1988).

In a particularly preferred embodiment the optical retardation films according to the present invention may thus be obtained by a method comprising:

- providing a solution comprising the foregoing cellulose derivative, an organic solvent and, optionally, at least one additive as specified above,
- casting said solution onto a support,
- drying the cast film at least partially, and then
- stretching the film mechanically in at least one direction,
- optionally holding the stretched film under tension for a period of time.

The organic solvent should be suitable to dissolve the cellulose ether material according to formula (I) and is preferentially volatile with a boiling point below 100°C in order to provide fast evaporation rates, i.e. a high drying efficiency. Eligible solvents comprise hydrocarbons, halogenated hydrocarbons, and hydrocarbons with other functional groups, particularly ethers, ketones, esters and alcohols.

Adequate hydrocarbon solvents include aromatic hydrocarbons with 6 to 18 carbon atoms ($C_{6-18}$ aromatic hydrocarbons) such as benzene, toluene, xylene, ethylbenzene, isopropyl benzene, decalin, diphenylethane or aromatic naphthas as well as their halogenated, preferably chlorinated, derivatives such as monochlorobenzene, dichlorobenzene, trichlorobenzene. Further, acyclic linear or branched, aliphatic hydrocarbons with 5 to 40 carbon atoms, which may be saturated or unsaturated, can be employed as organic solvent. Examples thereof include, but are not limited to naphthas, hexane, heptane, octane, isooctane, natural oils, mineral oils or petroleum. Moreover, cycloaliphatic hydrocarbons with 6 to 12 carbon atoms, which can be saturated or unsaturated, exemplified by cyclohexane, cyclohexene and methylcyclohexene, are useful as solvent for solution casting of the optical retardation films according to the invention.

Among the preferred solvents are aliphatic halogenated hydrocarbons with 1 to 6 carbon atoms, preferably with 1 to 2 carbon atoms, more preferably with a single carbon atom. Preferentially the halogen substituent is chlorine. Examples include methyl chloride, methylene chloride, chloroform, carbon tetrachloride, 1,2-dichloroethane, ethylene dichloride, trichloroethane, perchloroethylene, tetrachloroethane, tetrachloroethylene with methylene chloride being preferred.

Hydrocarbons with functional groups other than halogen, which represent suitable solvents in said solution casting method of the inventive cellulosic films, are in particular ethers, ketones, esters and alcohols. These compounds may have a linear or branched carbon skeleton, a cyclic or acyclic structure and could have more than one functional group, each independently selected form an ether group, a hydroxyl group, an ester group and a keto group. Further, additional functional groups different from an ether group, a hydroxyl group, an ester group and a keto group could be present.

Ether solvents useful to prepare a solution of the cellulose ether material according to formula (I) are cyclic or acyclic ether compounds containing 3 to 12 carbon atoms such as diethylether, diisopropyl ether, dimethoxymethane, 1,2-dimethoxyethane, 1,4-dioxane, 1,3-dioxolan, tetrahydrofuran, anisole, phenetole, morpholine, n-butyl ether, phenyl ether and benzyl ether as well as ether alcohols comprising one or more condensed alkylene oxide units, preferably ethylene oxide and/or propylene oxide units.

Suitable ketone solvents comprise acyclic or cyclic ketones with 3 to 12 carbon atoms such as acetone, methyl ethyl ketone, methyl isobutyl ketone, mesityl oxide, diacetone alcohol, acetophenone, diethyl ketone, diisobutyl ketone, cyclohexanone, cyclopentanone and methylcyclohexanone.

Esters that may be used as solvent for solution casting of the cellulose ether material set forth above to produce films of the present invention include esters with 3 to 12 carbon atoms exemplified by methyl formate, ethyl formate, ethyl propionate, propyl formate, pentyl formate, methyl acetate, ethyl acetate, isopropyl acetate, amyl acetate, cyclohexyl acetate, n-butyl acetate, sec-butyl acetate, isobutyl acetate, ethyl lactate, isopropyl lactate and methyl salicylate.

Alcoholic solvents useful in the above identified method for preparation of the inventive cellulosic films are lower molecular weight monohydric alcohols with 1 to 12 carbon atoms, preferably 1 to 4 carbon atoms, exemplified by methanol, ethanol, propanol, isopropanol, n-butanol, sec-butanol, isobutanol, cyclohexanol, furfuryl alcohol, methyl cyclohexanol, tetrahydrofurfuryl alcohol, benzylalcohol, phenyl ethyl alcohol and 2-ethylhexyl alcohol, wherein ethanol is preferable. Since the solubility of cellulose ether materials in these alcohols is rather low, the latter may preferably be used as co-solvent in solvent mixtures only. In such mixtures the alcohol component may promote gel formation of the film. Compounds with two or more functional groups that constitute suitable solvents in the above mentioned method for producing films according to the invention are illustrated for instance by 2-ethoxyethyl acetate, 2-methoxyethanol and 2-butoxyethanol.

Any of the foregoing solvents may be utilized singly as such in said method of film production. Alternatively and preferably, a mixture of two or more of the foregoing suitable solvents may be employed. Such mixtures could for instance comprise, without being limiting, a combination of an aromatic hydrocarbon solvent and an alcoholic solvent, of an aromatic hydrocarbon solvent and an ester solvent, of an ester solvent and an alcohol, of a ketone solvent and an alcoholic solvent or of an halogenated hydrocarbon solvent and an alcoholic solvent. Specific non-limiting examples include a toluene-ethanol mixture, a chloroform-ethanol mixture, an ethyl acetate-ethanol mixture and a methylene chloride-ethanol mixture. Beyond such binary solvent mixtures also tertiary or higher solvent mixtures may be employed in the present invention.

In a preferred embodiment, the solution utilized in the above-mentioned method of manufacturing an optical retardation film according to the invention comprises methylene chloride.

In a particularly preferable embodiment of the solution casting method according to the present invention, a mixture of at least one halogenated hydrocarbon as specified above such as methylene chloride and at least one non-halogenated hydrocarbon as specified above, including the mentioned unsubstituted hydrocarbons as well as the described ethers, esters, ketones and alcohols, may be employed as solvent. Herein the fraction of the halogenated hydrocarbon can be at least 60 wt.%, preferably at least 70 wt.%, based on the total weight of the solution.

The solution (dope) utilized in the above mentioned film manufacturing method can be prepared by dissolving the cellulose derivative set forth above and, optionally, one or more additives, in a solvent as set forth above. This is typically achieved by charging the mentioned components, which may be roughly mixed previously, simultaneously or sequentially to a vessel equipped with means for stirring. The charge of the vessel is then commonly stirred at a temperature in the range of 0 to 40°C until a homogeneous solution has been formed. Especially if a highly concentrated solution is to be prepared, the vessel may be heated to a temperature in the range of 40 to 200°C, preferably 80 to 110°C and/or pressurized by injection of an inert gas such as nitrogen or argon or by the vapor of the solvent to facilitate dissolution. For this purpose a pressure-sealed vessel including means for heating e.g. a jacket-type heating device could be employed. Alternatively the solution for film casting may be prepared using a cooling dissolution technique such as the one described in paragraphs [0097] to [0103] of US 2008/0227881 A1 for preparation of a cellulose acylate dope.

One or multiple additives as specified above may be added to the cellulose derivative set forth above during the preparation stage of the cellulose ether material, or during any of the steps during the dope preparation. In particular, if fine particles are to be incorporated into a film of the present invention upon preparation by the solution cast method, the particles can be added to the cast solution within every stage of the dope preparation or subsequently. Herein, it may be favorable to incorporate the particles to the dope by admixing a separate dispersion of the fine particles in a solvent, prepared by vigorous stirring and mixing e.g. by means of an ultrasonic agitation and/or a rotor-stator stirring device. The solvent may be selected from those mentioned above for dissolution of the cellulose ether material and is preferentially the same as for the one selected for the preparation of the dope. Addition of such fine particle dispersion to the dope yields excellent dispersibility of the fine particles in the dope and diminishes the particles' tendency to coagulate.

The total concentration of solids within the dope solution at the time of casting is preferably

in a range of from 5 to 35 wt%, more preferably from 10 to 30 wt%, even more preferably from 10 to 20%, based on the total weight of the solution. The concentration may be adjusted to the above range within the foregoing dissolution step. Alternatively, it is also possible that a solution of a low concentration is prepared and the concentration is controlled to the desirable range by a subsequent concentrating step.

As explained previously, said dope is cast onto a support to form a web in the next step of the solution-based method for producing films according to the invention using conventional solution casting equipment. The term "web" designates a film cast on a support. The support is a flat solid body preferably with a mirror-finished surface and may for instance be a band, a drum, a plate, a sheet, a foil or a film made of a polymeric material, a glass or a metal. Adequate examples include a stainless steel band, a glass plate or a polymeric film or foil. The dimensions of the support are not particularly limited, but typically casting widths are in the range of 10 to 2000 mm. Commonly the solution is cast at ambient temperature, i.e. typically in the range of 15 to 35°C without means for heating and cooling, but casting at a higher or lower temperature provided by heating or cooling of the support and/or the solution is possible. In a particular embodiment, the support is cooled to have a surface temperature below 10°C while the solution comprises considerable amounts of a relatively poor solvent such as an alcohol. These conditions favor rapid gel formation of the web.

The film thickness may be controlled to a value within the desirable range specified above for the optical retardation film of the present invention primarily by adjustment of the amount of solution applied per area within solvent casting, the solids concentration of the solution and/or the residual solvent content of the film.

After casting, at least a part of the solvent is evaporated from the cast film in the drying step. Drying may be

carried out by any publicly known method for drying films cast from solution. Drying can be conducted while the film is on the support as well as for a film, which has been stripped off from the support. For instance the web on the support could be dried by heating the support from the back, by heating both surfaces of the support e.g. by means of radiant heat, by exposing the web to a stream of air or another gas, which may optionally be heated, by applying a vacuum or any combination thereof. The cast film may be stripped off from the support once it has gained self supporting properties by gelation and/or solvent evaporation. Typically self supporting properties are attained when the solvent content within the web has decreased to a value below 70 wt.%, preferably below 50 wt.% based on the total mass of the film. The film stripped off from the support may be dried e.g. by exposing it to a stream of air or another gas, which may optionally be heated, by microwave heating, radiant heating, vacuum or any combination thereof. The drying temperature and duration have to be selected in accordance with the chosen solvent.

The residual solvent content in the film after completion of the film preparation process according to the method of the invention is preferably below 5 wt.%, more preferably below 3 wt.%, even more preferably below 2 wt.% relative to the total mass of the film.

The foregoing steps of the solution casting method may be applied to produce a film consisting of a single layer or a film having multiple layers, wherein at least one layer is according to the present invention each. Thus, by simultaneous or sequential casting, a multilayer film comprising at least one layer according to the present invention and one or more other functional layers can be obtained. The other functional layers could be exemplified by an anti-reflection layer, a light scattering layer, a transparent hard coat layer, an antistatic layer, an adhesive layer, an UV absorption layer, a polarizing layer or a protective layer as disclosed e.g. in paragraph [0150] to [0220] of US 2008/0227881 A1. Sequential casting is possible by repeating the steps of solution casting and at least partial drying with distinct dope solutions employing the film cast in the respective previous solution casting step as support for casting the subsequent layer. Moreover, a cast film may be stripped off and its side formerly in contact with the support be subjected to a seconding casting as described in JP-B-44-20235. For simultaneous multi layer casting, an apparatus with a plurality of casting nozzles, to apply a dope solution each, which may be the same or different among each two nozzles, wherein at least one solution comprises the cellulose derivative according to formula (I) in an amount according to the invention, could for instance be employed similarly to JP-A-61-158414, JP-A-122419, JP-A-61-94724 or JP-A-162617.

In the above identified solution-based preparation method for producing films according to the invention, the at least partially dried film, which is "unoriented" and may be on the support or stripped off from the support, is mechanically stretched in at least one direction. As a result, the polymer molecules constituting the film are oriented imparting birefringent properties to the film. By control of the stretching conditions as described in the following, optical retardation films according to the present invention with a desirable combination of birefringent characteristics as set forth above can be obtained.

In the stretching step of said preparation method the film may be stretched either uniaxially in machining or transverse direction or stretched biaxially in machining and transverse direction. In the case of the biaxial stretching, the film can be stretched in two directions simultaneously or sequentially, i.e. in machining direction followed by transverse direction, or vice versa. Herein "machine direction" refers to the orientation in casting direction and "transverse direction" to the orientation perpendicular to the casting direction. Orientation in a single direction (e.g. machine direction) yields a uniaxially oriented film. Similarly, orientation in two directions (e.g. machine direction and transverse direction), whether conducted simultaneously or as two separate steps, yields a biaxially oriented film.

Uniaxial or biaxial stretching can be carried out using a conventional tenter, e.g. a pin tenter, a clip tenter of a biaxial stretching tenter. If the film is on a support, the support must be sufficiently flexible to allow for effective stretching and has to sustain the mechanical stretching operation without rupture.

The stretching may be carried out at a temperature in the range of $T_g$ to $T_g$ + 50°C, more preferably in the range of $T_g$ + 5°C to $T_g$ + 30°C, even more preferably in the range of $T_g$ + 5°C to $T_g$ + 20°C, wherein $T_g$ refers to the glass transition temperature of the material the film is made of. The glass transition temperature may be determined by differential scanning calorimetry (DSC) analysis. General principles of DSC measurements and applications of DSC to studying polymeric materials are described e.g. in E. A. Turi, ed., Thermal Characterization of Polymeric Materials, Academic Press, 1981.

The stretching ratio is defined as the ratio $L_s/L_0$, wherein $L_s$ represents the length of the film in the stretching direction after stretching and $L_0$ defines the length of the film in the stretching direction before stretching. The stretching ratio may preferably be in the range of from 1.05 times to 6.0 times, more preferably from 1.1 times to 4.0 times, and even more preferably from 1.25 times to 3.0 times.

In a preferred embodiment of the method of manufacturing an optical retardation film according to the present invention the film is stretched to a length in the range of from 1.05 times to 6.0 times, preferably of from 1.1 times to 4.0 times, more preferably of from 1.25 times to 3.0 times, its initial length in the stretching direction at a temperature in the range of $T_g$ to $T_g$ +50 K, preferably of $T_g$ + 5°C to $T_g$ + 30°C, more preferably of $T_g$ + 5°C to $T_g$ + 20°C, wherein $T_g$ is the glass transition temperature of the cellulose derivative according to formula (I) as determined by differential scanning calorimetry.

The film stretching speed referring to the percentage elongation $(L_s-L_0)/L_0$ x 100% in either machining direction or transverse direction per unit of time is preferably from 0.1% /sec to 200% /sec, more preferably from 0.5% /sec to 100% /sec, and even more preferably from 1% /sec to 50% /sec.

The stretching may be carried out in a single step or multiple steps, wherein the stretching conditions can be the same or different among the steps, but in any case fall within the range of conditions as specified above for each individual step. Each stretching step, may optionally further include a heat setting step wherein the stretched film is held under tension at a temperature in the range of 150 to 250°C for a period of time in the range of from one second to three minutes.

While solution casting represents a preferred means of fabricating "unoriented" films of this invention, which may subsequently be subjected to mechanical stretching according to the foregoing method, other means to fabricate the "unoriented" films such as melt casting could be used. Conventional melt casting procedures are e.g. taught in Plastics Engineering Handbook of the Society of Plastics Industry, Inc., Fourth Edition, pages 156, 174, 180 and 183 (1976).

In a first step, the cellulose derivative set forth above optionally premixed with one or more additive as specified above may be supplied to an extruder such as a mini-cast film line manufactured by Killion Extruders, Inc., operating with set point temperatures, extruder screw speed, extruder die gap settings and extruder back pressure sufficient to convert the charged material from a solid (e.g. granular or pellet) state to a molten state. The extrusion process may typically be carried out at a temperature in the range of 150°C to 250°C, preferentially under an inert gas such as nitrogen. It is frequently recommendable to employ one or more plasticizers to reduce the melting temperature of the charged solid material, and to add one or more heat stabilizers and antioxidants to avoid material degradation at the high processing temperatures. Such additives may be selected from the list of suitable additives as specified above under the proviso that they are compatible with the required processing temperature. The melt viscosity at temperature of 230°C should preferably be in a range of 500 to 10.000 P, which could be achieved e.g. by addition of a flow agent as additive or by adjusting the average degree of polymerization of the cellulose derivative within the specified range.

The molten material is subsequently transferred e.g. by means of a gear pump to a film forming die, which can be any conventional film forming die, such as a "T-die" disclosed in U.S. Pat. No. 6,965,003 (Sone et al.) or a "coat hanger die" disclosed in Modern Plastics Handbook, Edited by Modern Plastics; Charles A Harper. (McGraw-Hill, 2000), Chapter 5, Processing of Thermoplastics, page 64-66, and extruded from the die onto a support. A film is then formed upon cooling by solidification of the cast material on the support, which can be as specified above in the context of solution casting under the proviso that the material the support is made of sustains the temperature of the cast melt without deformation or deterioration by chemical reaction. The film may be stripped off from the support for further processing once solidification has progressed as far that the film has self supporting properties. In particular the film may preferably be subjected to a subsequent film orientation treatment by mechanical stretching under the conditions as set forth above to generate desirable birefringent properties. The mechanical stretching can be carried out before or after the completion of cooling in the film formation process.

Films of this invention, obtained by solution casting, melt casting or any other film formation process and irrespective of being "unoriented" or "oriented", may be further laminated to other optical films to form a composite film structure with unique anisotropic birefringence properties. Particular examples of those film structures include, but not limited to, polarizing plates, positive and negative biaxial plate, positive and negative C-plate, negative wavelength dispersion plate. For a negative wavelength dispersion film or plate, the retardation is larger at a longer wavelength than at a shorter wavelength (e.g., $R_0$ at 450 nm<$R_0$ at 550 nm<$R_0$ at 650 nm).

The films of this invention may moreover be subjected to an optional surface treatment e.g. for an enhancement of their adhesion and compatibility to other adjacent functional layers. Possible surface treatments include subjecting the film to a plasma such as a glow discharge plasma or a corona discharge plasma, irradiation with energetic radiation such as UV light or energetic particles such as electrons or a chemical treatment. Typical plasma treatments may be conducted in an atmosphere of Ar, He, Ne, Kr, Xe, $N_2$, $CO_2$ or chlorofluorocarbons and mixtures thereof as excitation gas under pressures in a range from about 1 mbar to 1 bar. A chemical treatment commonly involves contacting the film with a reactive medium for instance by dipping, spraying or coating a reactive solution. For instance the inventive film comprising the cellulose derivative according to formula (I) could be subjected to an aqueous borontrihalogenide solution at room temperature for a duration ranging from 5 seconds to 20 minutes to facilitate hydrolysis of the ether groups. Also hydrolysis with acid catalyst solutions at higher temperatures presented as means to control the degree of substitution and/or the degree of polymerization of the cellulose ether material could be employed. The above reactions may be terminated by rinsing with alkaline solution followed by rinsing with water and may increase the hydrophilicity at the surface of the film. The degree of hydrolysis of the cellulose derivative at the film surface could accordingly be measured by determination of the contact angle using a contact angle meter.

The foregoing manufacturing methods provide means to produce the optical retardation films based on cellulose ether materials according to the invention, with comprehensive birefringence tuning ability in an economically attractive manner suitable for mass production.

The films of the present invention are amorphous, highly transparent and of low haze exhibiting adjustable birefringent properties, long-term durability, adequate mechanical stability and compatibility with other materials commonly used in manufacturing optical elements. They are thus considered as useful for optical compensation and for the production of optical elements for manipulation of the polarization state of light. In particular, they may be used to enhance wide viewing angle capabilities in liquid crystal display applications based on different LCD operation modes such as IPS (in-plane switching) mode, TN (twisted nematic) mode, FLC (ferroelectric liquid crystal) mode, OCB (optically compensatory bend) mode, STN (super twisted nematic) mode, VA (vertically aligned) mode or HAN (hybrid aligned nematic) mode. Specifically, the optical retardation films of the invention can be made to exhibit a combination of an in-plane birefringence $(n_x-n_y) \geq 0.0008$, an out-of-plane birefringence $(n_x+n_y)/2-n_z \geq 0.004$ and an optical biaxiality characterized by a value of the parameter $N_z$ in a range of from 2.5 to 7.0, fulfilling the particular requirements to an optical retardation film for LCDs of the VA-type with respect to most effective enhancement of wide viewing angle capabilities.

The film of the present invention may thus be utilized in a polarizing plate comprising a polarizer and two transparent protective films disposed on both sides thereof, wherein at least one of the protective films is a film according to the invention.

The polarizer may e.g. be an iodine-based polarizer, a dye-based polarizer using dichroic dye or a polyene based polarizer. Iodine- and dye-based polarizers are typically produced from a PVA-based film, wherein the production process comprises providing a PVA-based film, doping the film, uniaxial stretching of the film, an optional fixing treatment, and drying. The PVA-based film is typically provided by casting a solution or melt comprising a polymer that has been obtained by polymerization of vinyl ester monomers possibly using other ethylenically unsaturated compounds as comonomers and subsequent saponification of the ester functions. Doping of the film may be carried out prior to uniaxial stretching, during it or thereafter. Doping may e.g. be achieved by immersing the PVA-based film into a solution comprising iodine-potassium iodide and/or dichroic dyes, which are absorbed by the film or alternatively by blending these dopants already during the stage of film casting. The uniaxial stretching may be conducted as a wet process stretching the film in a warm or hot (30-90°C) aqueous bath, which may be a solution comprising the above dopants, or as a dry process stretching the film in air or an inert gas atmosphere at a temperature in the range of from 50 to 180°C. The stretching ratio is typically at least 4.0 times. The mechanical stretching imparts a unidirectional orientation to the iodine-doped PVA-based film, which is responsible for the film's polarizing effect. Typically the polarizer has a thickness in the range of from 10 to 40 $\mu$m, preferably of from 15 to 30 $\mu$m, after stretching. A fixation treatment means a crosslinking of the material the film is made of and may for instance be conducted by subjecting the film to a boric acid solution. Drying of the polarizer is typically accomplished at a temperature in the range of from 30 to 150°C.

The polarizing plate may comprise transparent protective films other than the optical retardation films according to the present invention. These other transparent protective films are not particularly limited and may e.g. be cellulose acylate films such as TAC films, which are commercially available.

The method by which the optical retardation films according to the present invention and/or the other transparent protective films can be applied to the polarizer to form the polarizing plate is not particularly limited. They may for instance be directly laminated or stuck onto the polarizer.

Optionally, additional other functional films may be applied between the polarizer and one or both of the protective films or on top of one or both of the protective films, wherein one or both of the protective films can be an optical retardation film according to the present invention. The other functional films include without being limiting an anti-reflection film, a light scattering film, a transparent hard coat, an antistatic film, an adhesive film, a UV absorption film or a polarizing film. Films of this type are described e.g. in paragraph [0150] to [0220] of US 2008/0227881 A1.

If required, a possibly pressure-sensitive adhesive on the basis of acrylate, silicone, urethane, polyvinyl alcohol, polyvinyl butyral, or other vinyl based lattices polymers could be employed to facilitate bonding between any two of the previously mentioned films, i.e. the polarizer, a protective film, which can be a film of the present invention or a protective film different thereof, and one of the other functional films.

The cellulose ether films according to the invention are preferably applied in an orientation characterized by their slow axis being parallel to or intersecting perpendicular with a transmission axis of the polarizer. If the alignment deviates from such orientation by more than 1 degree, light leakage increases and it is impossible to obtain sufficient contrast in an LCD comprising such polarizing plate. Accordingly, polarizing plates wherein the deviation from said axis alignment is below 1 degree, preferably below 0.5 degree, are desirable.

The inventive optical retardation film or a polarizing plate comprising at least one optical retardation film according to the invention may be used in a LCD display device. In one aspect, the present invention thus relates to a liquid crystal display or an imaging device comprising an optical retardation film of the present invention as set forth above.

Such liquid crystal display comprises a liquid crystal cell and two polarizing plates, one disposed on each of the two sides of the liquid crystal cell, wherein at least one of the polarizing plates comprises at least one optical retardation film according to the invention. Preferably optical retardation films according to the invention are used on the side of the polarizing plate facing the liquid crystal.

The liquid crystal cell typically comprises a conventional liquid crystal material between two sheets of conventional electrode substrates. The cell may be designed for operation in various modes including e.g. IPS (in-plane switching) mode, OCB (optically compensatory bend) mode or VA (vertically aligned) mode, however, as pointed out above, the optical retardation films according to the invention may have birefringent properties, which are particularly useful to improve the wide view performance of LCDs of the VA-type. Therefore the inventive optical retardation film or a polarizing plate comprising at least one optical retardation film according to the invention may preferably be used in a liquid crystal display based on operation in VA-mode or an imaging device comprising such LCD. In VA-mode operation conventionally a liquid crystal cell is employed wherein rod-like liquid crystalline molecule are substantially vertically aligned at the time of applying no voltage and typically substantially horizontally aligned when voltage is applied.

The present invention will be illustrated in more detail by the following examples, but the invention is not meant to be limited by these.

## Examples

### 1. Cellulosic materials

A complete list of the employed cellulosic materials and their basic properties is shown in Table 1.

C-1 to C-5 are experimental ethyl ether derivatives of cellulose with a varying degree of ethoxy substitution in the range of from 2.03 to 2.24. This is equivalent to a weight percentage of ethoxy groups for the ethyl cellulose ether materials from approximately 42 wt.% to about 45 wt.%, respectively. All these materials are amorphous exhibiting no melting-related peaks upon DSC analysis. All experimental samples were prepared using a two-stage reaction process as described in Example 8 of US Patent No. 4,547,570, wherein in a first stage cellulose, aqueous sodium hydroxide solution and ethyl chloride were reacted and in a second stage anhydrous NaOH was added, with the exception that no distillate was removed from the reactor. In each of the experiments, after the second sodium hydroxide addition, the reaction was allowed to run until the target DS was achieved. The DS was determined by in-process analysis as described below. The crude ethyl cellulose was then granulated, neutralized, washed, and dried.

RC-1, RC-2, RC-3, RC-4 and RC-5 are five experimental ethyl cellulose ether materials. All of these five cellulosic materials have a degree of ethoxy substitution greater than 2.25. Those ethyl cellulose ether materials with a degree of ethoxy substitution above 2.26 (RC-2, RC-3 and RC-4) are at least partly crystalline as indicated by distinct melting peaks in the DSC analysis. RC-1, RC-2, RC-3 and RC-4 each exhibit values of the weight average molecular weight comparable to examples C-1 to C-5 in a range of 70,000 to 105,000 g/mol. RC-5 is a ethyl cellulose ether material with a significantly lower weight average molecular weight of 15,800 g/mole. The experimental samples of RC-1, RC-2, RC-3, RC-4 and RC-5 were prepared using a two-stage reaction process as described in Example 8 of US Patent No. 4,547,570 wherein in a first stage cellulose, aqueous sodium hydroxide solution, and ethyl chloride were reacted and in a second stage anhydrous NaOH was added with the exception that no distillate was removed from the reactor. In each of the experiments, after the second sodium hydroxide addition, the reaction was allowed to run until the target DS was achieved. The DS was determined by in-process analysis as described below. The crude ethyl cellulose was then granulated, neutralized, washed, and dried.

In addition, a triacetyl cellulose film commercially available from Fujifilm was obtained and studied for reference purposes.

**Table 1. List of cellulosic materials and their basic properties**

| Cellulosic material | Degree of substitution | EtO groups [wt.%] | Mw [g/mol] | $T_g$ [°C] | $T_m$ [°C] | $\Delta H_m$ [J/g] |
|---|---|---|---|---|---|---|
| C-1 | 2.03 | 42.0 | 104,500 | 153.9 | n/a | n/a |
| C-2 | 2.10 | 43.0 | 104,000 | 149.1 | n/a | n/a |
| C-3 | 2.17 | 44.1 | 92,400 | 144.0 | n/a | n/a |
| C-4 | 2.19 | 44.4 | 86,000 | 144.1 | n/a | n/a |
| C-5 | 2.24 | 45.0 | 84,800 | 143.3 | n/a | n/a |
| RC-1 | 2.26 | 45.3 | 71,200 | 139.7 | n/a | n/a |
| RC-2 | 2.38 | 47.0 | 77,400 | 134.8 | 187.9 | 3.8 |
| RC-3 | 2.46 | 48.1 | 84,600 | 132.9 | 188.3 | 6.7 |
| RC-4 | 2.52 | 49.0 | 84,200 | 132.6 | 188.2 | 6.6 |
| RC-5 | 2.53 | 48.9 | 15,800 | 121.0 | n/a | n/a |

(continued)

| Cellulosic material | Degree of substitution | EtO groups [wt.%] | Mw [g/mol] | $T_g$ [°C] | $T_m$ [°C] | $\Delta H_m$ [J/g] |
|---|---|---|---|---|---|---|
| TAC film | unknown | n/a | n/a | 166.5 | 270.8 | n/d |
| **n/a: not available; n/d: not determined** | | | | | | |

**2. Characterization of cellulosic materials**

i). Degree of substitution

The degree of substitution (DS), i.e. the average number of hydroxyl groups being replaced by ethoxy groups per repeating unit at the 2-, 3- and 6-position of the repeating units of the cellulosic molecules, were measured in accordance with United States Pharmacopeia (USP) XXXII - National Formulary (NF) XXVII monograph "Ethylcellulose", section "Assay". The ethyl cellulose material was reacted with an excess of hydroiodic acid to liberate one mole of ethyl iodide per mole of ethoxy substituent. The resulting ethyl iodide was extracted with o-xylene and analyzed by gas chromatography combined with flame ionization detection. Quantification of the degree of ethoxy substitution relied on peak area measurements of the detection signals using internal standard calculations and a chromatography data system. The utilized apparatus, reagents, and procedure are described in detail below.

*Internal standard solution:* 120 μL of toluene were diluted with o-xylene to a total volume of 10 mL.

*Test solution:* 50.0 mg of ethyl cellulose, 50 mg of adipic acid and 2.0 mL of the internal standard solution were transferred into a suitable 5 mL thick-walled reaction vial with a pressure-tight septum closure. Subsequently, 2.0 mL of hydroiodic acid were cautiously added, the vial closed immediately tightly, and the filled vial weighed accurately. The vial was then shaken for 30 seconds, heated to 125°C for 10 minutes and allowed to cool for 2 minutes. Shaking, heating and cooling were repeated three times like this, wherein the vial was allowed to cool for 45 minutes at the end of the third step. The vial was then weighed again. If the mass loss was greater than 10 mg, the mixture was discarded and prepared once more. The upper layer of the mixture was used for the analysis.

*Reference solution:* 100.0 mg of adipic acid, 4.0 mL of the internal standard solution and 4.0 mL of hydroiodic acid were transferred into a suitable 10 mL thick-walled reaction vial with a pressure-tight septum closure. The vial was closed tightly and the filled vessel weighed accurately. Afterwards 50 μL of ethyl iodide were injected through the septum with a syringe and the vial weighed again to calculate as the difference to the initial weight the mass of ethyl iodide added. The mixture was finally shaken thoroughly and the layers were given time to separate.

*Chromatographic system*: The gas chromatograph was equipped with a flame-ionization detector and a 2-mm x 5.0-m stainless steel column packed with 3% G2 on 150 μm to 180 μm mesh support S1A. Nitrogen was utilized as carrier gas with a flow rate of about 15 mL per minute. The injection port and detector temperatures were both maintained at 200°C while the column temperature was maintained at 80°C.

*Procedure:* 1 μL of the upper layer of the reference solution was injected into the chromatograph, the chromatogram was recorded, and the areas of the peaks of the detection signal were calculated. The relative retention times in minutes were as follows: ethyl iodide 0.6, toluene 1.0 and o-xylene 2.3. The sensitivity of the system was adjusted in a manner that the maxima of the two principal peaks were at least 50% of the full scale of the detector. The test was not deemed valid unless the resolution between the peaks corresponding to ethyl iodide and toluene amounted to at least 2.0. Analogously to the procedure described for the reference solution, 1 μL of the Test solution was injected into the chromatograph and the chromatogram recorded. The observed retention times in the chromatogram of the reference solution served to identify the peaks in the chromatogram of the test solution. The mass fraction of ethoxy groups in weight percent, Y, was calculated from these experimental data by the formula

$$Y = [451{,}000/312][Q_1 m_2]/[Q_2 m_1(100 - f)]$$

wherein $Q_1$ is the ratio of the ethyl iodide peak area to the toluene peak area in the chromatogram obtained with the test solution; $Q_2$ is the ratio of the ethyl iodide peak area to the toluene peak area in the chromatogram obtained with the reference solution; $m_1$ is the mass of the ethyl cellulose used in the test solution in mg; $m_2$ is the mass of ethyl iodide used in the reference solution in mg; and f is the weight loss upon drying as a percentage. The weight loss upon drying is determined according to ASTM D914-00 (2006). The degree of substitution was calculated from the mass fraction of ethoxy groups according to

$$DS = 161.133Y/(45.061 - 28.054Y).$$

ii). Molecular Weight Determination

The weight average molecular weight of the ethyl cellulose materials used to manufacture the optical retardation films was measured by Gel-Permeation Chromatography (GPC) with refractive index (RI) and low-angle laser light scattering (LALLS) detection. A 50 g portion of the respective ethyl cellulose material was dissolved in 10 mL of unstabilized tetrahydrofuran (THF) solvent. The solutions were slowly shaken on a flat bed shaker at ambient temperature for 18 hours. All solutions were filtered through a 0.2-μm PTFE syringe filter prior to injection. A 100 μm aliquot was injected into a Waters 2690 liquid chromatography system run with a constant elution rate of 1.0 mL THF eluent per min utilizing two PL Gel Mixed-C columns with 5 μm packing (column batch number 82) connected in series for separation according to molecular weight. A Viscotek TDA 302 with RI and LALLS detectors was used to generate absolute molecular weight data. The absolute weight average molecular weight ($M_w$) data obtained with the TDA 302 was calibrated using a polystyrene molecular weight standard having a $M_w$ value of 20,000 g/mol (PS19880 available from Agilent Technologies, Santa Clara, CA). A specific refractive index increment (dn/dc) of 0.185 mL/g for polystyrene was used for quantification. The calibration constants were validated by measuring $M_w$ values of three additional polystyrene standards (PS49170, PS299400 and PS1683 available from Agilent Technologies, Santa Clara, CA). A specific refractive index increment (dn/dc) of 0.185 mL/g was used for all polystyrene samples. OmniSEC 4.0 software from Viscotek was used to determine the $M_w$ value by the Flow Injection Polymer Analysis (FIPA) method using both RI and LALLS detectors. A dn/dc value of 0.063 mL/g to 0.067 mL/g was used for measuring the ethyl cellulose samples. Mass recovery was obtained by comparing the detected mass from integration of the RI signal to that of the injected mass. The recoveries varied from 98.5% to 101.1%.

iii). Differential scanning calorimetry (DSC)

A model Q1000 differential scanning calorimeter (TA Instruments, Inc.) was used to determine the glass transition temperature ($T_g$), melting point ($T_m$) and heat enthalpy of the cellulosic materials by differential scanning calorimetry (DSC) analysis.

The model Q1000 differential scanning calorimeter was first calibrated with indium and then with water in accordance with standard procedures recommended for the Q1000 to ensure that the heat of melting ($\Delta H_m$) and onset of the melting temperature for indium were within 0.5 joules per gram (J/g) and 0.5°C of prescribed standards (28.71 J/g and 156.6°C), respectively, and that the onset of the melting temperature for water was within 0.5°C of 0°C.

The sample pan was placed in the differential scanning calorimeter's cell and the contents of the pan was heated at a rate of about 100°C/min to a temperature of 230°C. The contents of the pan was maintained at that temperature for approximately three minutes, then cooled at a rate of 10°C/min to a temperature of -60°C. The pan contents were subsequently held isothermally at -60°C for three minutes and then heated at a rate of 10°C/min up to 230°C in a step designated as the "second heating".

The glass transition temperature ($T_g$) of the cellulosic materials was determined as the inflection temperature in the second heating DSC curve where a change in the heat capacity was recorded. The glass transition is a second order endothermic transition, so in the DSC the transition appears as a step transition and not a peak such as might be seen with a melting transition.

The enthalpy curves that result from the second heating of the cellulosic material samples were further analyzed for the peak melting temperature, onset and peak crystallization temperatures and the melting enthalpy, $\Delta H_m$. The peak melting temperature was recorded as the melting point $T_m$ of the material. The melting enthalpy was measured in units of joules per gram (J/g) by integrating the area under the melting endotherm from the beginning of melting to the end of melting by using a linear baseline.

### 3. Dope preparation

A solvent stock was prepared by combining 80 parts by weight of methylene chloride to 20 parts by weight of dehydrated ethanol (200 proof). A stir bar was placed at the bottom of an 8-oz jar and 85 g of the stock solution were added. Afterwards, the jar was capped tightly with a PTFE-lined lid and placed on a stirring plate where it was stirred at a speed sufficient to create a small vortex. 15 g of cellulosic material were weighed into a weighing dish, transferred to the jar containing the stock solution and the jar recapped tightly again. The sample was allowed to stir until all the powder was wetted. Subsequently, the capped jar was placed on a horizontal roller mixer operated at low speed for several hours until the cellulosic material was dissolved completely. The jar was removed from the roller mixer and any entrained

air allowed to rise to the surface. The obtained 15% (w/w) ethyl cellulose dopes are highly viscous.

### 4. Film casting

The optical retardation films were cast using an Elcometer 4340 (Part# K4340M120), which was located in a ventilated enclosure. The Elcometer 3580/7 casting knife film applicator (Part# K0003580M007) was set to the appropriate thickness, e.g. initial casting thicknesses of 25 and 30 mils were used to prepare films with a thickness of ~3 mil (~ 75 microns) to ~3.5 mil (~90 microns) in the dry state, respectively. As a substrate for casting, a piece of defect-free, tempered laminated safety glass was placed on the Elcometer 4340 and fixed in place by means of suction by using a vacuum pump. The glass was cleaned with a small amount of methanol on a lint-free wipe to remove any airborne debris from the surface prior to casting. A strip of ethyl cellulose dope was poured quickly, taking care not to introduce bubbles, approximately 1.5" x 8" along the casting knife and the film was cast by movement of the casting knife film applicator at a rate of 2 to 4 cm/sec. Immediately thereafter, an inverted metal tray was placed over the cast film to create a vapor-rich environment over the film as it dries. The tempered laminated safety glass with film coating covered by the metal tray was moved to a ventilated enclosure and allowed to dry at room temperature for four hours. Afterwards, the lid was removed and the film allowed to dry in a vacuum oven at a temperature of 80°C for overnight. The dried film, which preferably had a smooth, glossy surface free of bubble defects, was peeled off the glass substrate for further processing and characterization. All film samples prepared by solution casting had a thickness in the range of 50 to 100 μm and lateral dimensions the size of A4 paper.

### 5. Film stretching protocol

Rectangular specimens with lateral dimensions of 1" (width) x 5" (length) were die cut from the dried films obtained from solution casting, and were then conditioned at 20°C and 50% relative humidity for at least 24 hrs before being subjected to mechanical stretching. Mechanical stretching was performed on a tensile tester Instron 5565 equipped with an environmental chamber. The gauge length of 2.5" was used for all stretching experiments. The film specimens were each uniaxially stretched to a length that corresponded to 1.5 times their initial dimension in the film length direction. The stretching operation was conducted with a constant strain rate of 20% /sec at a temperature that was chosen to be approximately 10°C above each material's glass transition temperature. Table 2 provides an overview of the films prepared by solution casting and subsequent mechanical stretching including the applied stretching temperature for each individual film sample. The environmental chamber was first pre-heated to the desirable stretching temperature; the film specimen was then loaded by fixing it to the top and bottom fixtures of the tensile tester, followed by an immediate closure of the environmental chamber door. The film specimen was allowed to equilibrate in the environmental chamber for about 7 minutes before the stretching operation was started. Once the stretching operation had been accomplished, the door of the environmental chamber was opened and the stretched film sample was allowed to cool off for about 15-20 seconds under the tension mode before it was detached from the fixtures and removed from the tensile tester. The film thickness of the mechanically stretched films was measured by a micrometer and is reported in Table 2.

**Table 2. List of film Examples (1-5) and Comparative Examples (A-E)**

| Film | Cellulosic material | Stretching temperature [°C] | Film thickness d [μm] |
|---|---|---|---|
| 1 | C-1 | 160 | 92 |
| 2 | C-2 | 160 | 85 |
| 3 | C-3 | 155 | 69 |
| 4 | C-4 | 155 | 83 |
| 5 | C-5 | 155 | 83 |
| A | RC-1 | 155 | 81 |
| B | RC-2 | 145 | 96 |
| C | RC-3 | 140 | 104 |
| D | RC-4 | 140 | 78 |
| E | TAC film | 155 | 79 |

Films cast from the ethyl cellulose material RC-5 were found to be very brittle. It was not possible to remove

the dried films made by casting material RC-5 from the glass substrate without fracture of the films. Due to their brittleness no mechanical stretching experiment was possible with these films either, indicating that ethyl cellulose materials with a weight average molecular weight below 17,500 g/mol are less suitable for the preparation of optical retardation films.

**6. Optical characterization of the films**

The film haze, H in percent, was measured in accordance with the ASTM D-1003 method using a haze meter (haze-gard plus, BYK-Garner). The haze value averaged over at least three independent measurements is reported in Table 3 for each film as cast.

The optical retardation characteristics of the films that had been stretched uniaxially on a tensile tester as described above were analyzed using an EXICOR™ 150ATS (Hinds Instrument) apparatus at a wavelength of 546 nm at room temperature and room humidity condition (i.e., about 75°F and 50% relative humidity). The measurements were performed in the central area of the stretched film samples. $R_0$ was measured by shining light incident in the direction of the surface normal of the film onto the planar surface of the stretched film. The slow axis, which represents the direction along which the refractive index in the film plane is the maximum, could also be determined from this measurement. Additionally the optical retardation at oblique light incidence, $R_{40}$, was measured by tilting the film 40° against the direction of the surface normal of the film, wherein the in-plane axis that is perpendicular to the slow axis served as rotation axis. From the measured values of $R_0$ and $R_{40}$ and the inputted film thickness, d, the three dimensional refractive indices $n_x$, $n_y$ and $n_z$, with x and y defining the film plane, wherein x represents the direction of the slow axis and y the axis perpendicular thereto, and z denoting the thickness direction, were calculated for each film sample by a combination of the following equations:

$$n_x + n_y + n_z = 3n_0 \quad (5)$$

$$R_0 = (n_x - n_y) \times d \quad (3)$$

$$\left( n_x - \frac{n_y n_z}{\sqrt{n_z^2 \cos^2\theta + n_y^2 \sin^2\theta}} \right) \times \frac{d}{\cos\theta} = R_{40} \quad (6)$$

In the equation (5), no is the average refractive index of the cellulosic material, which is approximately 1.48 (cf. TexLoc Refractive Index of Polymers Library (www.texloc.com)). The birefringence calculations for all cellulosic films were based on this average refractive index value of 1.48. The angle 0 in equation (6) is determined by the following equation:

$$\sin\theta = \frac{\sin 40°}{n_0} \quad (7)$$

Based upon solutions of the equation system given above, $R_{th}$ and $N_z$ could be calculated as follows:

$$N_z = \frac{n_x - n_z}{n_x - n_y} \quad (2)$$

$$R_{th} = \left( \frac{n_x + n_y}{2} - n_z \right) \times d \quad (4)$$

The optical characteristics of the films are summarized in Table 3.

**Table 3. Optical characteristics of Film Examples (1-5) and Comparative Examples (A-E)**

| Film | Cellulosic material | DS | d [μm] | H [%] | Retardation (λ: 546 nm) | | | Optical parameters (λ: 546 nm) | | |
|---|---|---|---|---|---|---|---|---|---|---|
| | | | | | $R_0$ [nm] | $R_{40}$ [nm] | $R_{th}$ [nm] | $n_x$-$n_y$ | $(n_x+n_y)/2-n_z$ | $N_z$ |
| 1 | C-1 | 2.03 | 92 | 1.0 | 223.3 | 390.2 | 785.6 | 0.00243 | 0.00854 | 4.0 |
| 2 | C-2 | 2.10 | 85 | 0.7 | 127.4 | 232.6 | 494.8 | 0.00150 | 0.00582 | 4.4 |
| 3 | C-3 | 2.17 | 69 | 0.4 | 171.2 | 270.4 | 465.6 | 0.00248 | 0.00675 | 3.2 |
| 4 | C-4 | 2.19 | 83 | 0.4 | 155.1 | 264.9 | 516.8 | 0.00187 | 0.00623 | 3.8 |
| 5 | C-5 | 2.24 | 83 | 0.4 | 128.4 | 268.5 | 661.5 | 0.00155 | 0.00797 | 5.7 |
| A | RC-1 | 2.26 | 81 | 0.5 | 63.9 | 161.8 | 463.0 | 0.00079 | 0.00572 | 7.7 |
| B | RC-2 | 2.38 | 96 | 7.0 | 35.5 | 195.4 | 756.0 | 0.00037 | 0.00788 | 21.8 |
| C | RC-3 | 2.46 | 104 | 16.8 | 57.2 | 205.7 | 703.6 | 0.00055 | 0.00677 | 12.8 |
| D | RC-4 | 2.52 | 78 | 10.1 | 255.4 | 343.6 | 349.1 | 0.00278 | 0.00447 | 2.1 |
| E | TAC film | unknown | 79 | 0.2 | 32.0 | 49.8 | 84.7 | 0.00041 | 0.00107 | 3.1 |

*Examples 1-5 in Table 3 demonstrate that ethyl cellulose ether materials having a degree of* ethoxy substitution in the range of 2.00 to 2.25 yield amorphous films with low haze excellently suited for optical applications. After uniaxial stretching, these films show a unique combination of an in-plane birefringence $(n_x-n_y) \geq 0.0008$, a high out-of-plane birefringence $(n_x+n_y)/2-n_z \geq 0.004$ ($R_{th} \geq 100$ nm at the measurement wavelength of 546 nm) and biaxial optics characterized by values of the parameter $N_z$ in the range of from 2.5 to 7.0. Films with such optical characteristics, which are attained in an economically attractive manner without the use of expensive specialty materials or sophisticated processing and that is readily scalable to mass production, are particularly useful as optical retardation films for VA-type LCD applications to improve the wide view performance. This offers e.g. the potential to eliminate the use of two compensation films with one for each polarizer in the current LCD-TV design.

Comparative Examples A-D show versus Examples 1-5 in Table 3 that ethyl cellulose ether materials with a degree of substitution greater than 2.25 are not suitable to manufacture optical retardation films with the above specified combination of birefringent properties that is favorable for VA-mode LCD applications. For instance these films lack adequate biaxial optics, i.e. an $N_z$ value in the range, of 2.5 to 7.0. Additionally, the films of Comparative Examples B-D were found to have high haze and low transparency, in view of the results of the DSC analysis presumably due to at least partial crystallinity of these films, which further contributes to these films' unsuitability for optical display applications.

The comparison of Examples 1-5 to Comparative Example E in Table 3 demonstrates further that cellulosic material conventionally used for the manufacture of protective and optical retardation films such as triacetyl cellulose cannot provide sufficiently high birefringence and suitably high optical anisotropy between the film plane and the thickness direction as $(n_x-n_y)$ remains < 0.0005, $(n_x+n_y)/2-n_z$ is only ~0.001 and $R_{th}$ is < 100 nm, if no optical additives are incorporated into the TAC film. Alkyl substitution on the cellulose units thus offers a higher degree of optical anisotropy between the film plane and the thickness direction than acetyl substitution.

## Claims

1. An optical retardation film comprising a cellulose derivative, the β-1,4-glycosidically bound repeating units thereof being represented by formula (I),

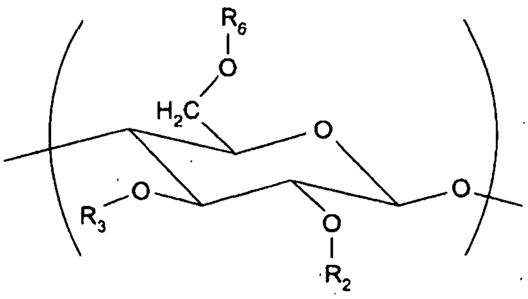

(I),

wherein $R_2$, $R_3$ and $R_6$ each independently represent a hydrogen atom or an alkyl group and may be the same or different from each other among the repeating units, **characterized by** said cellulose derivative having a degree of substitution related to the average number of hydroxyl groups being replaced by alkoxy groups at the 2-, 3- and 6-position of the repeating units in the range of 2.00 to 2.25 per repeating unit and wherein the optical retardation film has an in-plane birefringence ($n_x$-$n_y$) at a wavelength of 546 nm in the range of 0.0008 to 0.003, an out-of plane birefringence (($n_x$+$n_y$)/2-$n_z$) at a wavelength of 546 nm of at least 0.004 and an optical biaxiality with the parameter $N_z$ as expressed in equation (2),

$$N_z = \frac{n_x - n_z}{n_x - n_y} \qquad (2)$$

in the range of 2.5 to 7.0 at a wavelength of 546 nm, wherein $n_x$ is the refractive index for the direction having the highest refractive index in the film plane (x-direction), $n_y$ is the refractive index in the direction perpendicular to the x-direction in the film plane and $n_z$ is the refractive index along the film thickness direction.

2. The optical retardation film of claim 1, wherein the cellulose derivative has a weight average molecular weight as determined by gel permeation chromatography in the range of 17,500 to 500,000 g/mol, more preferably in the range of 25,000 to 200,000 g/mol and even more preferably in the range of 50,000 to 120,000 g/mol.

3. The optical retardation film of claim 1 or 2, wherein the alkyl group in the cellulose derivative is a $C_1$-$C_4$ alkyl group, which can be linear or branched, substituted or unsubstituted.

4. The optical retardation film of claim 3, wherein the alkyl group in the cellulose derivative is an ethyl group.

5. The optical retardation film of any of the preceding claims comprising further at least one additive selected from a polymer other than the cellulose derivative as set forth in claim 1, a plasticizer, an UV absorber, a thermal stabilizer, fine particles and a retardation enhancing agent or a mixture thereof.

6. The optical retardation film of any of claims 1-5 having a thickness, d, in the range of 1 μm to 150 μm, preferably in the range of 15 μm to 150 μm, more preferably in the range of 25 μm to 120 μm, even more preferably in the range of 40 μm to 120 μm, particularly preferably in the range of 50 μm to 120 μm, most preferably in the range of 60 μm to 100 μm.

7. The optical retardation film of any of the preceding claims, wherein said optical retardation film is a single layer film or is comprised as at least one constituting layer in a multilayer film.

8. The optical retardation film of any of the preceding claims, wherein the in-plane birefringence ($n_x$-$n_y$) is in the range of 0.0012 to 0.0026 and/or the out-of plane birefringence (($n_x$+$n_y$)/2-$n_z$) is at least 0.005 and/or $N_z$ is in the range of 3.0 to 6.0 at a wavelength of 546 nm each.

9. The optical retardation film of any of the preceding claims having a haze measured in accordance with ASTM D-1003 of no more than 2%.

10. A method of manufacturing an optical retardation film as claimed in any of claims 1-9 **characterized in that** said method comprises:

- providing a solution comprising the cellulose derivative as set forth in any of claims 1-4, an organic solvent and, optionally, at least one additive as specified in claim 5,
- casting said solution onto a support,
- drying the cast film at least partially, and then
- stretching the film mechanically in at least one direction, and
- optionally holding the stretched film under tension for a period of time.

**11.** The method of manufacturing an optical retardation film according to claim 10, wherein the solution comprises methylene chloride.

**12.** The method of manufacturing an optical retardation film according to claim 10 or 11, wherein the film is stretched to a length in the range of from 1.05 times to 6.0 times its initial length in the stretching direction at a temperature in the range of $T_g$ to $T_g$ +50 K, wherein $T_g$ is the glass transition temperature of the cellulose derivative as determined by differential scanning calorimetry.

**13.** The method of manufacturing an optical retardation film according to claim 12, wherein the film is stretched either uniaxially in machining or transverse direction or stretched biaxially in machining and transverse direction.

**14.** A liquid crystal display or an imaging device comprising an optical retardation film as set forth in any of claims 1-9.

**Patentansprüche**

**1.** Ein optischer Verzögerungsfilm umfassend ein Cellulosederivat, dessen β-1,4-glykosidisch gebundene Wiederholungseinheiten durch die Formel (I) dargestellt werden,

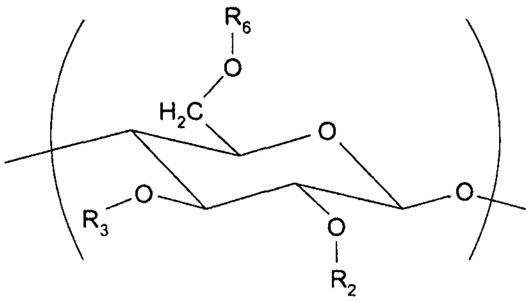

(I),

wobei $R_2$, $R_3$ und $R_6$ jeweils unabhängig voneinander ein Wasserstoffatom oder eine Alkylgruppe darstellen und unter den Wiederholungseinheiten gleich oder voneinander verschieden sein können, **dadurch gekennzeichnet, dass** das Cellulosederivat einen Substitutionsgrad, bezogen auf die durchschnittliche Anzahl an Hydroxylgruppen, die an der 2-, 3- und 6-Position der Wiederholungseinheiten durch Alkoxygruppen ersetzt sind, im Bereich von 2,00 bis 2,25 pro Wiederholungseinheit hat und der optische Verzögerungsfilm eine Doppelbrechung in der Ebene ($n_x$-$n_y$) bei einer Wellenlänge von 546 nm im Bereich von 0,0008 bis 0,003, eine Doppelbrechung aus der Ebene (($n_x$+$n_y$)/2-$n_z$) bei einer Wellenlänge von 546 nm von mindestens 0,004 und eine optische Biaxialität mit dem Parameter $N_z$, wie in der Gleichung (2) ausgedrückt,

$$N_z = \frac{n_x - n_z}{n_x - n_y} \quad (2)$$

bei einer Wellenlänge von 546 nm im Bereich von 2,5 bis 7,0 aufweist, wobei $n_x$ der Brechungsindex für die Richtung ist, die den höchsten Brechungsindex in der Filmebene aufweist (x-Richtung), $n_y$ der Brechungsindex in der Richtung rechtwinkelig zu der x-Richtung in der Filmebene ist und $n_z$ der Brechungsindex entlang der Richtung der Filmdicke ist.

**2.** Der optische Verzögerungsfilm gemäß Anspruch 1, wobei das Cellulosederivat ein gewichtsmittleres Molekulargewicht, bestimmt durch Gelpermeationschromatographie, im Bereich von 17.500 bis 500.000 g/mol, bevorzugter im

Bereich von 25.000 bis 200.000 g/mol und stärker bevorzugt im Bereich von 50.000 bis 120.000 g/mol aufweist.

**3.** Der optische Verzögerungsfilm gemäß Anspruch 1 oder 2, wobei die Alkylgruppe in dem Cellulosederivat eine $C_1$-$C_4$-Alkylgruppe ist, die linear oder verzweigt, substituiert oder unsubstituiert sein kann.

**4.** Der optische Verzögerungsfilm gemäß Anspruch 3, wobei die Alkylgruppe in dem Cellulosederivat eine Ethylgruppe ist.

**5.** Der optische Verzögerungsfilm gemäß einem der vorhergehenden Ansprüche umfassend des Weiteren mindestens ein Additiv, ausgewählt aus einem sich von dem in Anspruch 1 spezifizierten Cellulosederivat unterscheidenden Polymer, einem Weichmacher, einem UV-Absorptionsmittel, einem thermischen Stabilisator, Feinpartikeln und einem verzögerungsfördernden Mittel oder einer Mischung derselben.

**6.** Der optische Verzögerungsfilm gemäß einem der Ansprüche 1 bis 5, wobei der optische Verzögerungsfilm eine Dicke, d, im Bereich von 1 μm bis 150 μm, bevorzugt im Bereich von 15 μm bis 150 μm, stärker bevorzugt im Bereich von 25 μm bis 120 μm, noch stärker bevorzugt im Bereich von 40 μm bis 120 μm, insbesondere bevorzugt im Bereich von 50 μm bis 120 μm, am bevorzugtesten im Bereich von 60 μm bis 100 μm aufweist.

**7.** Der optische Verzögerungsfilm gemäß einem der vorhergehenden Ansprüche, wobei der optische Verzögerungsfilm ein einschichtiger Film ist oder als mindestens eine aufbauende Schicht in einem mehrschichtigen Film enthalten ist.

**8.** Der optische Verzögerungsfilm gemäß einem der vorhergehenden Ansprüche, wobei die Doppelbrechung in der Ebene ($n_x$-$n_y$) im Bereich von 0,0012 bis 0,0026 ist und/oder die Doppelbrechung aus der Ebene (($n_x$+$n_y$)/2-$n_z$) mindestens 0,005 ist und/oder $N_z$ im Bereich von 3,0 bis 6,0 ist, jeweils bei einer Wellenlänge von 546 nm.

**9.** Der optische Verzögerungsfilm gemäß einem der vorhergehenden Ansprüche, wobei der optische Verzögerungsfilm eine Trübung (Haze-Wert), gemessen nach ASTM D-1003, von nicht mehr als 2 % aufweist.

**10.** Ein Verfahren zur Herstellung eines optischen Verzögerungsfilms wie in einem der Ansprüche 1 bis 9 beansprucht, **dadurch gekennzeichnet, dass** das Verfahren umfasst:

- Bereitstellen einer Lösung umfassend das Cellulosederivat, wie in einem der Ansprüche 1 bis 4 spezifiziert, ein organisches Lösungsmittel und, wahlweise, mindestens ein Additiv, wie in Anspruch 5 spezifiziert.
- Gießen der Lösung auf einen Träger,
- Trocknen des gegossenen Films, zumindest zum Teil, und dann
- mechanisches Dehnen des Films in mindestens einer Richtung, und
- wahlweise Halten des gedehnten Films unter Spannung für eine Zeitdauer.

**11.** Das Verfahren zur Herstellung eines optischen Verzögerungsfilms gemäß Anspruch 10, wobei die Lösung Dichlormethan umfasst.

**12.** Das Verfahren zur Herstellung eines optischen Verzögerungsfilms gemäß Anspruch 10 oder 11, wobei der Film auf eine Länge im Bereich des 1,05-bis 6,0-fachen seiner ursprünglichen Länge in der Dehnrichtung bei einer Temperatur im Bereich von $T_g$ bis $T_g$ +50 K gedehnt wird, wobei $T_g$ die Glasübergangstemperatur des Cellulosederivats, bestimmt durch dynamische Differenz-Kalorimetrie, ist.

**13.** Das Verfahren zur Herstellung eines optischen Verzögerungsfilms gemäß Anspruch 12, wobei der Film entweder uniaxial in Bearbeitungsrichtung oder in Querrichtung gestreckt wird oder biaxial in Bearbeitungsrichtung und Querrichtung gestreckt wird.

**14.** Eine Flüssigkristallanzeige oder ein bildgebendes Gerät umfassend einen optischen Verzögerungsfilm wie in einem der Ansprüche 1 bis 9 spezifiziert.

## Revendications

**1.** Un film de retard optique comprenant un dérivé de la cellulose, les unités de répétition liées de façon β-1,4-glycosidique de celui-ci étant représentées par la formule (I),

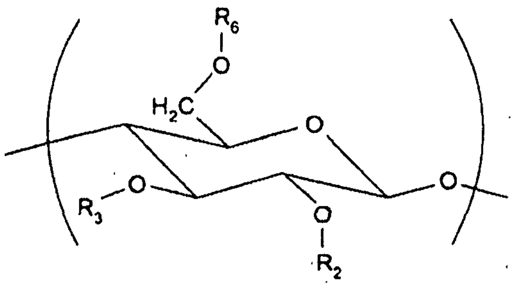

(I),

dans laquelle $R_2$, $R_3$ et $R_6$ représentent indépendamment chacun un atome d'hydrogène ou un groupe alkyle et peuvent être les mêmes ou différents les uns des autres parmi les unités de répétition, **caractérisé en ce que** ledit dérivé de la cellulose a un degré de substitution relatif au nombre moyen de groupes hydroxyle remplacés par des groupes alcoxy à la position 2, la position 3 et la position 6 des unités de répétition compris dans la gamme allant de 2,00 à 2,25 par unité de répétition et le film de retard optique ayant une biréfringence en plan ($n_x$-$n_y$) à une longueur d'onde de 546 nm comprise dans la gamme allant de 0,0008 à 0,003, une biréfringence hors plan (($n_x$+$n_y$)/2-$n_z$) à une longueur d'onde de 546 nm d'au moins 0,004 et une biaxialité optique avec le paramètre $N_z$ tel qu'exprimé dans l'équation (2),

$$N_z = \frac{n_x - n_z}{n_x - n_y} \qquad (2)$$

comprise dans la gamme allant de 2,5 à 7,0 à une longueur d'onde de 546 nm, dans lequel $n_x$ est l'indice de réfraction pour la direction ayant l'indice de réfraction le plus élevé dans le plan du film (direction x), $n_y$ est l'indice de réfraction dans la direction perpendiculaire à la direction x dans le plan du film et $n_z$ est l'indice de réfraction dans la direction d'épaisseur du film.

**2.** Le film de retard optique de la revendication 1, dans lequel le dérivé de la cellulose a une masse moléculaire moyenne en poids telle que déterminée par chromatographie par perméation de gel comprise dans la gamme allant de 17 500 à 500 000 g/mol, plus préférablement dans la gamme allant de 25 000 à 200 000 g/mol et encore plus préférablement dans la gamme allant de 50 000 à 120 000 g/mol.

**3.** Le film de retard optique de la revendication 1 ou de la revendication 2, dans lequel le groupe alkyle dans le dérivé de la cellulose est un groupe alkyle en $C_1$ à $C_4$, lequel peut être linéaire ou ramifié, substitué ou non substitué.

**4.** Le film de retard optique de la revendication 3, dans lequel le groupe alkyle dans le dérivé de la cellulose est un groupe éthyle.

**5.** Le film de retard optique de n'importe lesquelles des revendications précédentes comprenant en sus au moins un additif sélectionné parmi un polymère autre que le dérivé de la cellulose tel qu'exposé dans la revendication 1, un plastifiant, un absorbeur d'UV, un stabilisant thermique, des particules fines et un agent de renforcement de retard ou un mélange de ceux-ci.

**6.** Le film de retard optique de n'importe lesquelles des revendications 1 à 5 ayant une épaisseur, d, comprise dans la gamme allant de 1 $\mu$m à 150 $\mu$m, préférablement dans la gamme allant de 15 $\mu$m à 150 $\mu$m, plus préférablement dans la gamme allant de 25 $\mu$m à 120 $\mu$m, encore plus préférablement dans la gamme allant de 40 $\mu$m à 120 $\mu$m, de manière particulièrement préférable dans la gamme allant de 50 $\mu$m à 120 $\mu$m, de manière préférée entre toutes dans la gamme allant de 60 $\mu$m à 100 $\mu$m.

**7.** Le film de retard optique de n'importe lesquelles des revendications précédentes, ledit film de retard optique étant un film monocouche ou étant compris comme au moins une couche constitutive dans un film multicouche.

**8.** Le film de retard optique de n'importe lesquelles des revendications précédentes, dans lequel la biréfringence en plan ($n_x$-$n_y$) est comprise dans la gamme allant de 0,0012 à 0,0026 et/ou la biréfringence hors plan (($n_x$+$n_y$)/2-$n_z$) est d'au moins 0,005 et/ou $N_z$ est compris dans la gamme allant de 3,0 à 6,0 à une longueur d'onde de 546 nm chacun.

**9.** Le film de retard optique de n'importe lesquelles des revendications précédentes ayant un trouble mesuré en conformité avec l'ASTM D-1003 de pas plus de 2 %.

**10.** Une méthode de fabrication d'un film de retard optique tel que revendiqué dans n'importe lesquelles des revendications 1 à 9 **caractérisée en ce que** ladite méthode comprend le fait de :

- fournir une solution comprenant le dérivé de la cellulose tel qu'exposé dans n'importe lesquelles des revendications 1 à 4, un solvant organique et, facultativement, au moins un additif tel que spécifié dans la revendication 5,
- couler ladite solution sur un support,
- sécher au moins en partie le film coulé, et ensuite
- étirer le film de façon mécanique dans au moins une direction, et
- maintenir facultativement le film étiré sous tension pendant une période de temps.

**11.** La méthode de fabrication d'un film de retard optique selon la revendication 10, dans laquelle la solution comprend du chlorure de méthylène.

**12.** La méthode de fabrication d'un film de retard optique selon la revendication 10 ou la revendication 11, dans laquelle le film est étiré jusqu'à une longueur comprise dans la gamme allant de 1,05 fois à 6,0 fois sa longueur initiale dans la direction d'étirement à une température comprise dans la gamme allant de $T_g$ à $T_g$ + 50 K, dans laquelle $T_g$ est la température de transition vitreuse du dérivé de la cellulose telle que déterminée par calorimétrie différentielle à balayage.

**13.** La méthode de fabrication d'un film de retard optique selon la revendication 12, dans laquelle le film est soit étiré de façon uniaxiale dans la direction d'usinage ou transversale, soit étiré de façon biaxiale dans la direction d'usinage et transversale.

**14.** Un affichage à cristaux liquides ou un dispositif d'imagerie comprenant un film de retard optique tel qu'exposé dans n'importe lesquelles des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20080227881 A
- US 20070036916 A1
- JP 2007206368 A
- US 20080107829 A1
- JP 2007052079 A
- JP 2006282885 A
- US 20090273837 A1
- US 20070009676 A1
- JP 2003096207 A
- WO 2010151065 A2
- JP 2004157300 A
- US 1679943 A
- US 2413802 A
- US 20010020090 A1
- EP 0210917 A2
- US 20080227881 A1
- JP 4420235 B
- JP 61158414 A
- JP 122419 A
- JP 61094724 A
- JP 162617 A
- US 6965003 B, Sone
- US 4547570 A


### Non-patent literature cited in the description


- **DENG-KE YANG ; SHIN-TSON WU.** Fundamentals of Liquid Crystal Devices. John Wiley & Sons, Ltd, 2006
- **H. MORI.** High performance TAC film for LCDs. *Proc. SPIE,* 2006, vol. 6135, 613503
- **NAKAYAMA et al.** *J. Photopolymer Sci. Tech.,* 2006, vol. 19 (2), 169-173
- *Cellulose Communication,* 1999, vol. 6, 73-79
- *Chirality,* vol. 12 (9), 670-674
- Comprehensive Cellulose Chemistry. Wiley-VCH, 2001, vol. 2
- *J. Amer. Chem. Soc.,* 1996, vol. 118, 5346
- *J. Amer. Chem. Soc.,* 1970, vol. 92, 1582
- *Mol. Cryst. Liq. Cryst.,* 1979, vol. 53, 229
- *Mol. Cryst. Liq. Cryst.,* 1982, vol. 89, 93
- *Mol. Cryst. Liq. Cryst.,* 1987, vol. 145, 111
- *Mol. Cryst. Liq. Cryst.,* 1989, vol. 170, 43
- *Quarterly Review of Chemistry by The Chemical Society of Japan,* 1994
- **C. DESTRADE et al.** *Molecular Crystallography,* 1981, vol. 71, 111
- **C. DESTRADE et al.** *Molecular Crystallography,* 1985, vol. 122, 141
- **B. KOHNE et al.** *Angew. Chem.,* 1984, vol. 96, 70
- **J. ZHANG et al.** *J. Am. Chem. Soc.,* 1994, vol. 116, 2655
- **ULRICH SIEMANN.** Solvent cast technology - a versatile tool. *Progress in Colloid and Polymer Science,* 2005, vol. 130, 1-14
- **JOHN H. BRISTON.** Plastic Films. Longman Scientific & Technical, 1988, 87-89
- Thermal Characterization of Polymeric Materials. Academic Press, 1981
- Plastics Engineering Handbook of the Society of Plastics Industry. 1976, 156, , 174, , 180, , 183
- Processing of Thermoplastics. **CHARLES A HARPER.** Modern Plastics Handbook. McGraw-Hill, 2000, 64-66